# EUROPEAN PATENT SPECIFICATION

(11) **EP 3 548 688 B1**
(45) Date of publication and mention of the grant of the patent: **17.11.2021**
(21) Application number: 17876220.9
(22) Date of filing: 29.11.2017
(51) Int. Cl.: E06B 7/22, E06B 7/16

(54) **REINFORCED FLEXIBLE STRUCTURE OR SEAL**
VERSTÄRKTE FLEXIBLE STRUKTUR ODER DICHTUNG
STRUCTURE OU JOINT SOUPLE RENFORCÉ(E)

(30) Priority: 30.11.2016 DK PA201670947; 03.05.2017 DK PA201770302; 15.06.2017 DK PA201770464; 29.09.2017 DK PA201700540; 18.10.2017 DK PA201770793
(43) Date of publication of application: 09.10.2019
(73) Proprietor: Raxit Seals ApS, 2840 Holte (DK)
(72) Inventor: LARSEN, Kenneth John Seifert, 2770 Kastrup (DK); FRIMAND, Claus, 2840 Holte (DK)
(74) Representative: Nordic Patent Service A/S
(86) International application number: PCT/DK2017/050400
(87) International publication number: WO 2018/099532

(56) References cited:
- EP-A2- 0 178 064
- WO-A1-87/06760
- DE-A1- 2 038 302
- GB-A- 361 327
- GB-A- 445 049
- GB-A- 1 416 757
- US-A- 3 436 891
- US-A- 4 172 106
- US-A- 4 902 480
- US-A1- 2005 147 702
- US-A1- 2014 250 788
- US-A1- 2015 292 197
- US-A1- 2016 029 616

## Description

### TECHNICAL FIELD

The disclosure relates to a structure or seal for sealing a space, such as a space between an edge of a wall, fence, door or window and an adjacent surface to avoid entrance of for example unwanted animals, insects, or water between the edge of the wall, fence, door or window and the surface. The unwanted animals or water may include rats, mice, rainwater, sewage water, and water from flooding. The structure or seal may also help in preventing temperature changes across the sealed space.

### BACKGROUND

A general problem of entryway design for buildings relates to the dual issues of excluding inclement weather and animals or vermin from entering or impacting the interior when the entryway is shut. One category of known sealing strips for excluding inclement weather comprises flexible synthetic or rubber strips, which are installed at the perimeter of the door at an entryway. Another category of flexible strips for controlling internal temperature are manufactured with rows of tightly packed bristles.

However, vermin are wily and persistent in the face of currently-known flexible barriers, which are keeping them from shelter and/or food. The term vermin relates to animals considered to be pests, including rats and mice. Synthetic or rubber or bristle strips may present a challenge but not a lasting one, and especially rats or mice will find a way in to reach any available food.

US 2015/292197 discloses a modified door sweep having steel sheeting or steel mesh fully embedded in a flexible polymer as to provide an effective barrier between an area such as a room in a home or a garage and the outside, by preventing rodent destruction or circumvention of the sweep. However, the disclosed steel mesh is composed of metal wires running both in the longitudinal and vertical directions of the door sweep, which may be effective for preventing vermin from entering there way through the door sweep, but by having metal wires in the vertical direction, the door sweep has no or very little flexibility in the vertical direction, which is a problem, when opening and closing a door, to which the door sweep is mounted

An improvement to currently available seal strips is therefore needed.

### SUMMARY

It is an object of the invention to provide an improved sealed wall, fence, door, port or window assembly, which can be used for sealing a space between an edge of a wall, fence, door or window and an adjacent surface to avoid entrance of animals, insects, or water, or to avoid temperature changes.

This object is achieved in a first aspect with a sealed wall, fence, door, port or window assembly according to claim 1. All further embodiments in the description not focussing on the assembly of claims 1 to 10 or on features of the assembly according to claims 1 to 10 are not part of the invention and are purely for information purposes only.

The reinforced flexible seal may be used for sealing a gap or space between an edge of a door or window and an adjacent surface to avoid entrance of animals, insects, or water between the edge of the door or window and the surface, or to avoid temperature changes across the sealed space.

In a possible implementation form of the first aspect, the reinforced flexible seal has a width for substantially forming a seal between an edge of a door or window and an adjacent surface when connected to the edge of the door or window.

In a possible implementation form of the first aspect, a plurality of metal wires are embedded in the flexible outer material.

In a possible implementation form of the first aspect, at least part of the elongated metal members or metal wires are formed as narrow metal strips.

In a possible implementation form of the first aspect, at least half of the reinforced flexible seal is flexible around an axis parallel to the longitudinal direction of the reinforced flexible seal or parallel to the longitudinal direction of the elongated metal members or metal wires.

In a possible implementation form of the first aspect, the reinforced flexible seal comprises
a first section with a flexible outer material wherein a plurality of elongated metal members or metal wires are embedded and arranged substantially parallel to each other, said first section having a maximum width defined by the maximum distance between the two outermost positioned elongated metal members or metal wires of said plurality of substantially parallel metal wires; and
a second section arranged next to the first section alongside one of said outermost positioned elongated metal members or metal wires;
wherein the second section is formed by a flexible material and holds no elongated metal members or metal wires running substantially parallel to the elongated metal members or metal wires of the first section; and
wherein the second section has a maximum width no less than one fifth, or no less than one quarter of the maximum width of the first section.

In a possible implementation form of the first aspect, the second section has a maximum width of no less than one third, no less than half, no less than two thirds, no less than the whole width, or no less than one and a half or twice the whole width of the maximum width of the first section,

In a possible implementation form of the first aspect, elongated metal members or metal wires only are embedded in the flexible outer material of the reinforced flexible seal.

In a possible implementation form of the first aspect, all the elongated metal members or metal wires of the reinforced flexible seal are arranged substantially parallel to each other, and the successively arranged elongated metal members or metal wires are arranged with substantially equal spacing.

In a possible implementation form of the first aspect, the flexible seal has a lower edge, and the spacing between said lower edge and a lowermost positioned elongated metal member or metal wire is smaller than said substantially equal spacing.

In a possible implementation form of the first aspect, at least part of the elongated metal members or metal wires extend in the whole length of the flexible seal.

In a possible implementation form of the first aspect, the reinforced flexible seal has a first part and a second part, with a plurality of metal wires running substantially parallel to each other in the first part and a plurality of metal wires running substantially parallel to each other in the second part, wherein a plurality of adjacent metal wires of the first part are disconnected from a corresponding plurality of metal wires of the second part.

In a possible implementation form of the first aspect, a plurality of adjacent metal wires of the first part are disconnected from a corresponding plurality of metal wires of the second part along a substantially straight disconnection line.

In a possible implementation form of the first aspect, the reinforced flexible seal has a first end part with a first seal edge substantially perpendicular to the longitudinal direction of the reinforced flexible seal, and a plurality of metal wires is running substantially parallel to each other in the first end part of the reinforced flexible seal, said metal wires of the first end part being disconnected from any metal wires running substantially parallel to each other within the reinforced flexible seal next to the first end part.

In a possible implementation form of the first aspect, the metal wires of the first end part are disconnected from the metal wires next to the first end part along a substantially straight disconnection line.

In a possible implementation form of the first aspect, the disconnection line forms an angle α substantially in the range of 20° to 90°, such as substantially in the range of 30° to 90°, such as substantially in the range of 30° to 80°, such as substantially in the range of 30° to 70°, such as substantially in the range of 30° to 60° to the longitudinal direction of the substantially parallel wires.

In a possible implementation form of the first aspect, the disconnection line forms an angle α substantially perpendicular to the longitudinal direction of the substantially parallel wires.

In a possible implementation form of the first aspect, all the metal wires of the first part are disconnected from the metal wires of the second part.

In a possible implementation form of the first aspect, the distance between the closets wire ends of two closest neighbouring and disconnected or separated metal wires of the first part and the second part is no larger than 20 mm, such as no larger than 19 mm, such as no larger than 18 mm, such as no larger than 17 mm, such as no larger than 15 mm, such as no larger than 12 mm, such as no larger than 10 mm, such as no larger than 9 mm, such as no larger than 8 mm, such as no larger than 7 mm, such as no larger than 6 mm, such as no larger than 5 mm, such as no larger than 4 mm, such as no larger than 3 mm, or such as no larger than 2 mm.

In a possible implementation form of the first aspect, the edge is a door edge and the surface extends in a plane substantially parallel to the door edge, and the surface is a ground surface, a floor surface, a concrete surface, a door threshold, or a door frame.

In a possible implementation form of the first aspect, the edge is a window edge and the surface extends in a plane substantially parallel to the window edge, and the surface is a wall surface or a window frame.

In a possible implementation form of the first aspect, the metal wires of the flexible seal extend substantially parallel to the longitudinal direction of the door or window edge.

In a possible implementation form of the first aspect, there is also provided a seal assembly comprising the reinforced flexible seal and at least one connector for connecting the reinforced flexible seal to a door or window edge with the metal wires extending substantially parallel to the longitudinal direction of the door or window edge.

According to the first aspect there is also provided a bottom sealed door assembly having a door with a lower edge, wherein a reinforced flexible seal selected from any of implementations forms of the flexible seals or seal assemblies according to the first aspect is connected to the lower edge of the door.

In a possible implementation form of the first aspect, the reinforced flexible seal is connected to the door or window edge with at least part of the second section being connected to the door or window edge and with at least part of the first section being positioned free from the door or window edge.

According to the first aspect there is also provided a method for mounting a reinforced flexible seal selected from any of the implementations forms of the reinforced flexible seals according to the first aspect horizontally on the bottom part of a door leaf or door wing in order to seal a gap below the bottom part of the door leaf or door wing, comprising at least one of the following steps a, b, c:
a) an end part of the reinforced flexible seal is bent in an angle of 60-120 degrees preferably about 90 degrees, and the bent end part is thereafter secured e.g. by a screw or other fastener to a hinged edge of the door leaf or door wing or the leading edge of the door leaf or door wing;
b) both end parts of the reinforced flexible seal is bent in an angle of 60-120 degrees preferably about 90 degrees, and the bent end parts are thereafter secured e.g. by a screw or other fastener to the hinged edge of the door leaf or door wing and the leading edge of the door leaf or door wing;
C at least a part of an end part of the reinforced flexible seal is bent in an angle of 120-180 degrees, preferably about 180 degrees, and then securing the reinforced flexible seal to the bottom part of the door leaf or door wing.

In a possible implementation form of the method of the first aspect, then at least a part of an end part of the reinforced flexible seal is bent in an angle of 120-180 degrees preferably about 180 degrees, and said bent end part is thereafter secured e.g. by fastening the bent end part to the door leaf or door wing or by fixating the bent end part to the main part of the blade door seal or door wing e.g. by means of a fastener such as a rivet or a cable tie.

When a reinforced flexible seal or structure according to one or more implementation forms of the first aspect, is flexed back and forth along an axis in the lengthwise direction of the elongated metal members or metal wires, some of metal members or wires may gradually be forced out from one end of the reinforced flexible seal or structure.

One possible solution to this problem may be to provide a pressure on the metal elements or wires within the flexible outer material. Here, the reinforced flexible seal or structure or at least a part, such as the lowermost part or lowermost 2.5 cm, of the seal or structure may be provided with one or more pressure parts or pressure systems, which from both sides of the reinforced flexible seal or structure set at least a part of the seal or structure under pressure thereby increasing the friction between the metal members or wires and the flexible outer material.

Thus, in a possible implementation form of the first aspect, the reinforced flexible seal or structure or at least a lowermost part, such as the lowermost 2.5 cm, of the seal or structure is provided with one or more pressure parts, which from both sides of the reinforced flexible seal or structure set at least the lowermost part of the seal or structure under pressure thereby increasing the friction between the metal members or wires and the flexible outer material. It is also within a possible implementation form of the first, second, fifth, sixth, tenth or eleventh aspect, that the reinforced flexible seal or structure or at least a part of the seal or structure is provided with one or more pressure systems or pressure parts, with each pressure system or pressure part providing a pressure between one or more of the metal members or metal wires and the flexible outer material. Furthermore, it is also within a possible implementation form of the first, second, fifth, sixth, tenth or eleventh aspect, that the reinforced flexible seal or structure or at least a part of the seal or structure is provided with at least two or three pressure systems or pressure parts, with each pressure system or pressure part providing a pressure between at least one or two of the metal members or metal wires and the flexible outer material.

Examples of useful devices for the pressure parts or pressure systems are A) rivets, B) screw bolts and nuts, and C) other fasteners mounted through the door seal e.g. with a washer plate on each side of the door seal. Another example is a clip.

Another solution to the problem of the movement of the metal elements or wires within the flexible outer material may be obtained when the reinforced flexible seal have a bent part or bent end part, with at least part of the elongated metal members or metal wires extending within said bent part or end part.

By having the elongated metal members or metal wires bent within an end part of the reinforced flexible structure, the elongated metal members or metal wires may be locked within the flexible structure, and the elongated metal members or metal wires may not be able to move relative to the flexible outer material, if the flexible structure is flexed back and forth relative to a lengthwise direction of the elongated metal members or metal wires.

Thus, in a possible implementation form of the first aspect, the reinforced flexible seal has a bent part or bent end part, with at least part of the elongated metal members or metal wires extending within said bent part or end part at an angle relative to the part of the elongated metal members or metal wires extending within the non-bent part of the reinforced flexible seal.

In another possible implementation form of first aspect, the reinforced flexible seal has a bent end part at both ends, with at least part of the elongated metal members or metal wires extending within said end parts being bent at an angle relative to the part of the elongated metal members or metal wires extending within the non-bent part of the reinforced flexible seal.

In a possible implementation form of first aspect, the wires within a bent end may be bent at angle of at least 30 °, such as at least 45°, such as at least 60°, such as at least 75°, or such as around 90°. However, it is also within a possible implementation form of the fifth aspect, that the wires within a bent end part are bent at an angle larger than 90°, such as at an angle in the range of 90° to 120°, or such as at an angle in the range of 120° to 180°. The wires within a bent end part may also be bend at an angle in the range of 60° to 120°, such as at an angle in the range of 75° to 105°.

In a possible implementation form of the first aspect, the bent end part may have a width or extension substantially equal to the thickness of the flexible outer material.

In a possible implementation form of first aspect, the length of the bent part of the elongated metal members or metal wires extending within a bent end part is substantially equal to the thickness of the flexible outer material.

In a possible implementation form of the first aspect, the length of the bent part of the elongated metal members or metal wires extending within a bent end part is no larger than 5 mm, such as no larger than 4 mm, such as no larger than 3 mm, or such a no larger than 2 mm.

Another way of solving the problem of the movement of the metal elements or wires within the flexible outer material is to use elongated metal members or metal wires having an a least partly uneven and/or coated outer surface to thereby obtain a better attachment to the flexible outer material.

Thus, in a possible implementation form of first aspect, at least part of or all of the elongated metal members or metal wires are elongated metal members or metal wires having an a least partly uneven and/or coated outer surface. Here, possible implementations forms of the elongated metal members or metal wires having an at least partly uneven and/or coated outer surface may include the possible implementations forms of the elongated metal members or metal wires having an a least partly uneven and/or coated outer surface provided or described in connection with the tenth aspect. In a possible implementation form of the first, second, fifth, sixth, seventh or eleventh aspect, the elongated metal members or metal wires having an at least partly uneven and/or coated outer surface may be deformed by having an at least partly fluted or grooved outer surface. In a possible implementation form of the first, second, fourth, fifth, sixth, seventh, ninth or eleventh aspect, each or part of the fluted or grooved deformed wires have a direction of extension with the outer surface of the deformed wire holding grooves extending at an angle to said direction of extension. In a possible implementation form of the first, second, fifth, sixth, seventh or eleventh aspect, the grooves has and angle, which is at least 30°, such as at least 40°, such as at least 50°, such as at least 60°, such as at least 70°, such as at least 80°, or such as about 90° to the longitudinal direction or direction of extension of the wires.

In a possible implementation form of the first aspect, the flexible outer material or the flexible outer material of the first section comprises a flexible plastic material, such as flexible polyvinyl chloride, PVC, and/or wherein the flexible outer material comprises a rubber material.

In a possible implementation form of the first aspect, the flexible outer material or the flexible outer material of the first section comprises a flexible polymer material, which may be a material comprising a natural polymer material such as rubber and/or a synthetic polymer material such as synthetic rubber or a thermoplastic material or a polyvinyl chloride, PVC, material.

In a possible implementation form of the first aspect, the flexible outer material or the flexible outer material of the first section comprises a thermoplastic elastomer, TPE, type material.

In a possible implementation form first aspect, the flexible outer material or the flexible outer material of the first section has a shore hardness, Shore A, of not below 40, such as not below 50, such as not below 60, such as not below 65, such as not below 70, such as not below 75, such as in the range of 75-80. For some purposes even harder material may be used having a shore hardness, Shore A, of not below 80, such as not below 85, such as not below 90.

In a possible implementation form of the first aspect, the polymer or thermoplastic elastomer of the flexible outer material or the flexible outer material of the first section is a thermoplastic vulcanizates, TPV, type material. In a possible implementation form of the first, second, fifth, sixth, seventh, tenth or eleventh aspect, the polymer material is selected from the range of Santoprene™ materials, such as Santoprene™ 201-73.

In a possible implementation form first aspect, the flexible outer material has a thickness in the range of 2 to 30 mm, such as in the range of 2 to 20 mm, such as in the range of 2 to 10 mm, such as in the range of 2 to 5 mm, such as in the range of 2,5 to 4 mm, such as about 3 mm.

In order to secure that the flexible outer material of the reinforced flexible seals or structures according to the different aspects is able to maintain the enclosing or embedding of the elongated metal members or metal wires, it is important that the combination of material hardness, shore hardness, and material thickness has a sufficient high value. Thus, in a possible implementation form of the first, second, fifth, sixth, seventh, tenth or eleventh aspect, the ratio between the thickness of the flexible outer material and the Shore A hardness score of the flexible outer material (indirectly reflecting the flexibility of the material) may be such that the result of a multiplication of the predominant thickness in mm by the Shore A score is a number in the range of 175-275, such as 190-275, such as 200-260, such as 210-250 such as 220-240.

In a possible implementation form of the first aspect, at least part of or all of said wires are arranged at a distance to each other being no larger than 20 mm, such as no larger than 19 mm, such as no larger than 18 mm, such as no larger than 17 mm, such as no larger than 15 mm, such as no larger than 12 mm, such as no larger than 10 mm, such as no larger than 9 mm, such as no larger than 8 mm, such as no larger than 7 mm, such as no larger than 6 mm, such as no larger than 5 mm, such as no larger than 4 mm, such as no larger than 3 mm, or such as no larger than 2 mm.

In a possible implementation form of first aspect, the elongated metal members or elongated metal members or metal wires are made of one or more of the following five materials or alloys thereof: a) iron b)steel c) stainless steel, d) spring steel e) welding wire filler metal such as 308L filler metal.

In a possible implementation form of the first aspect, at least part of or all of the elongated metal members or metal wires are formed as narrow metal strips. The metal strips may be made of steel or stainless steel or spring steel.

In a possible implementation form of the first aspects, the wires or strips are flexible metal wires, such as braided or twisted wires.

In a possible implementation form of the first aspect, the elongated metal members or metal wires or metal strips have a thickness or diameter equal to or no less than 0,4 mm, equal to or no less than 0,6 mm, equal to or no less than 0,7 mm, equal to or no less than 0,8 mm, equal to or no less than 0,9 mm, equal to or no less than 1 mm, equal to or no less than 1,1 mm, equal to or no less than 1,2 mm, equal to or no less than 1,2 mm, equal to or no less than 1,3 mm, equal to or no less than 1,4 mm, equal to or no less than 1,5 mm, equal to or no less than 1,6 mm, equal to or no less than 1,7 mm, equal to or no less than 1,8 mm, equal to or no less than 1,9 mm, equal to or no less than 2,0 mm, equal to or no less than 2,1 mm, equal to or no less than 2,2 mm, equal to or no less than 2,4 mm, equal to or no less than 2,7 mm, or equal to or no less than 3 mm.

In a possible implementation form of first aspect, the metal strips may have a width equal to or no less than 1 mm, equal to or no less than 1,5 mm, equal to or no less than 2 mm, or equal to or no less than 2,5 mm.

In a possible implementation form of the first aspect, the flexible material has a width of up to 120 cm, such as up to 100 cm, such as up to 80 cm, such as up 50 cm, such as up to 40 cm, such as in the range of 1,5 to 30 cm, such as in the range of 2 to 25 cm, such as in the range of 2 to 20 cm, such as in the range of 2 to 15 cm, such as in the range of 4 to 10 cm, such as in the range of 5 to 9 cm, such as about 8 cm.

It is within one or more possible implementation forms of the present disclosure that the reinforced flexible structure or seal according to the first aspect is produced by an extrusion process or by an insert molding process.

It is within one or more possible implementation forms of the present disclosure that the reinforced flexible structure or seal according to the first aspect is produced by an extrusion process according to any of the methods of the fourth and/or ninth aspects.

The foregoing and other objects are achieved by the features of the independent claims. Further implementation forms are apparent from the dependent claims, the description and the figures. These and other aspects of the invention will be apparent from the embodiments described below.

### BRIEF DESCRIPTION OF THE DRAWINGS

In the following detailed portion of the present disclosure, the invention will be explained in more detail with reference to the example embodiments shown in the drawings, in which:
Fig. 1a is a partially cut away perspective view of a reinforced flexible structure or seal according to an example embodiment;
Fig. 1b shows a deformed metal wire for use in a reinforced flexible structure or seal according to an example embodiment;
Figs. 2a to 2d illustrate a reinforced flexible structure or seal with disconnected reinforcement wires according to an example embodiment;
Fig. 3 is an isometric illustration of a lower edge door sealing assembly according to an example embodiment;
Fig. 4 is an enlarged isometric illustration of a part of the lower edge door sealing assembly of Fig. 3 according to an example embodiment;
Fig. 5 shows a lower edge window sealing assembly according to an example embodiment;
Figs. 6a and 6b illustrate a sealed door assembly with two door wings according to an example embodiment;
Figs. 7a and 7b are cut through views of a sealed door assembly with two door wings according to an exemplary embodiment;
Figs. 8a and 8b illustrate sealing of a lower edge of a port or door according to an example embodiment;
Fig. 9 is a schematic cut away perspective view of a system for producing a reinforced flexible structure according to an example embodiment;
Fig. 10 is a schematic cut away side view of the system of Fig. 9 according to an example embodiment;
Fig. 11 is a schematic cut away top view of the system of Fig. 9 according to an example embodiment;
Fig. 12 is a flow chart illustrating a method for producing a reinforced flexible structure according to an example embodiment;
Fig. 13 is a partially cut away perspective view of a reinforced flexible structure or seal according to an example embodiment;
Figs. 14a, 14b, 14c and 14d show partially cut away perspective views of reinforced flexible structures or seals according to example embodiments;
Figs. 14e, 14f, and 14g show perspective views of different shaped reinforced flexible structures or seals according to example embodiments;
Figs. 15a and 15b illustrate a sealed door assembly with two door wings according to an example embodiment;
Fig. 16 illustrates a reinforced flexible structure or seal with disconnected reinforcement wires according to an example embodiment;
Fig. 17 illustrates flexibility of the reinforced flexible structure or seal of Fig. 16 according to an example embodiment;
Fig. 18 illustrates a sealed door assembly with two door wings according to an example embodiment;
Fig. 19 is a cross sectional view of a reinforced flexible structure or seal and a door assembly using such structure or seal according to an example embodiment;
Fig. 20 is a cross sectional view of a reinforced flexible structure or seal and a door assembly using such structure or seal according to an example embodiment;
Fig. 21 is a cross sectional view of a reinforced flexible structure or seal according to an example embodiment;
Figs. 22a, 22b and 22c illustrate seals for a door assembly and a sealed door assembly with two door wings according to an example embodiment;
Figs. 23a and 23b are schematic cut away perspective views of an extrusion part for a system for producing a reinforced flexible structure according to an example embodiment;
Fig. 24 is a schematic view of a system for producing a reinforced flexible structure according to an example embodiment;
Fig. 25 is a flow chart illustrating a method for producing a reinforced flexible structure according to an example embodiment;
Fig. 26 is a partially cut away perspective view of a reinforced flexible structure or seal according to an example embodiment;
Figs. 27a-27g illustrates seal combinations with a reinforced flexible structure or seal provided with a brush or fibre material according to example embodiments;
Fig. 28 illustrates a door assembly with a reinforced flexible seal provided with pressure parts according to an example embodiment;
Fig. 29a shows a reinforced flexible structure or seal having a bent end part according to an example embodiment:
Fig. 29c illustrates a door assembly with a reinforced flexible seal having a bent end part according to an example embodiment;
Figs. 30a and 30b illustrates a reinforced flexible structure or seal with a flexible cut-out part at the bottom according with a to an example embodiment;
Fig. 31 shows a reinforced flexible structure or seal according to an example embodiment;
Fig. 32 shows a reinforced flexible structure or seal having a bent end part according to an example embodiment;
Fig. 33 shows a reinforced flexible structure or seal having a bent end part according to an example embodiment.
Fig. 34 illustrates a reinforced flexible structure or seal with pressure parts according to an example embodiment; and
Fig. 35 illustrates a door assembly with a reinforced flexible seal provided with pressure parts according to an example embodiment.

### DETAILED DESCRIPTION

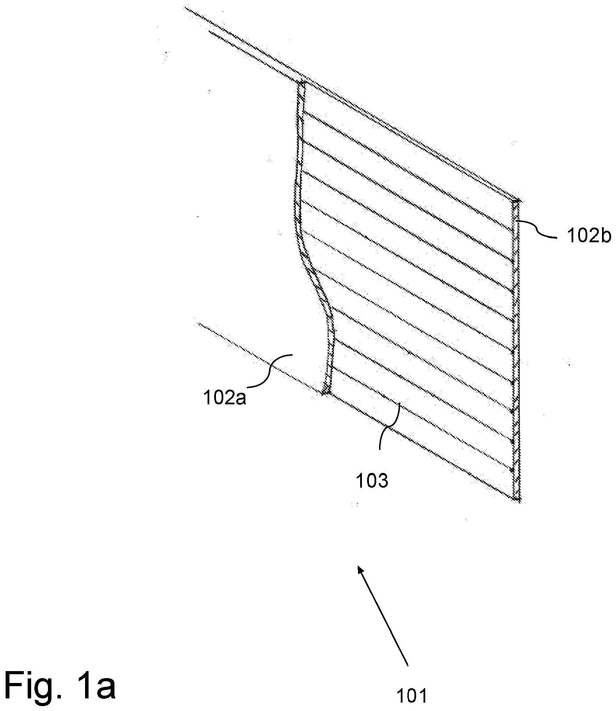

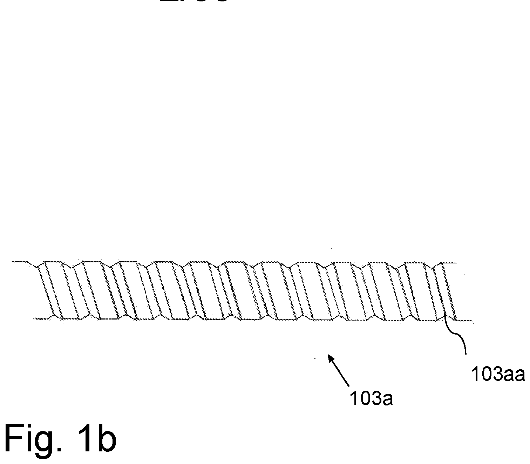

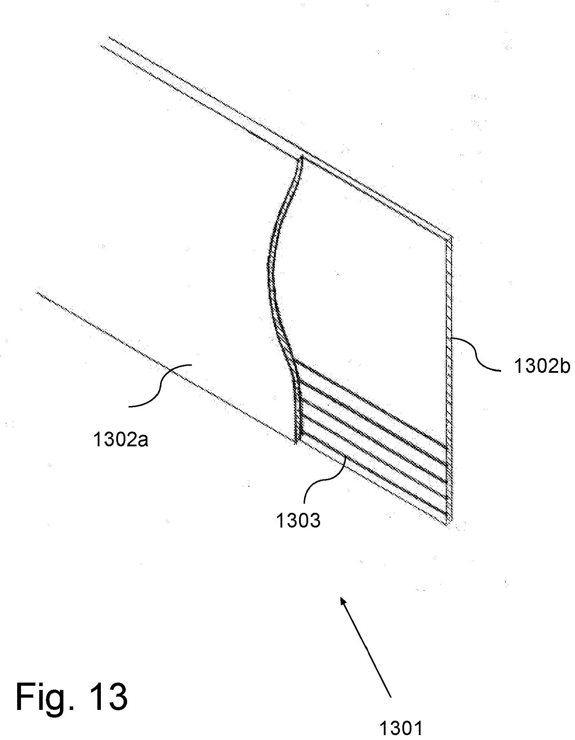

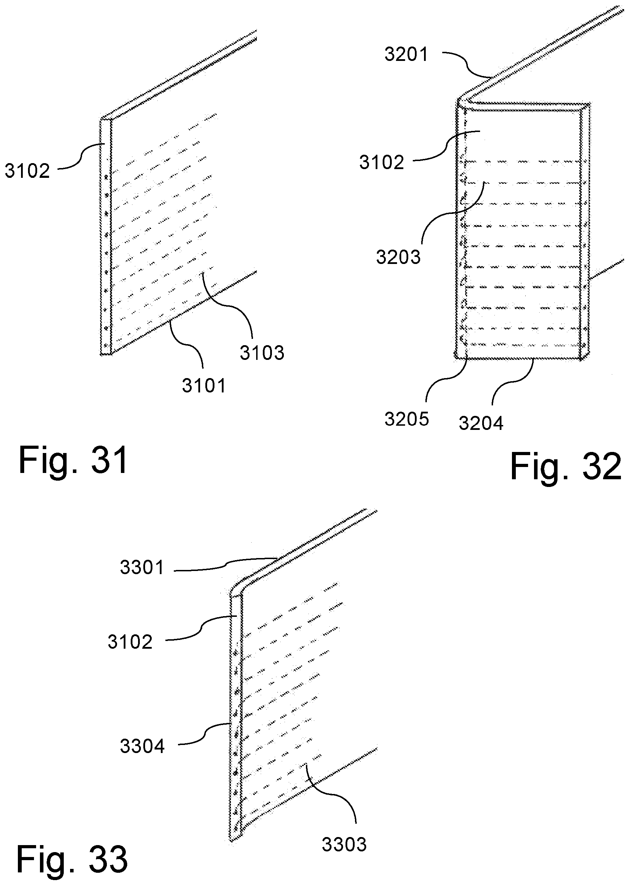

Fig. 1 is a partially cut away perspective view of a reinforced flexible structure or seal 101 according to a first example embodiment, and Fig. 13 is a partially cut away perspective view of a reinforced flexible structure or seal 1301 according to a second example embodiment. Fig. 31 shows a reinforced flexible structure or seal 3101 according to an example embodiment, Fig. 32 shows a reinforced flexible structure or seal 3201 having a bent end part 3204 according to a first example embodiment, and Fig. 33 shows a reinforced flexible structure or seal having a bent end part 3304 according to a second example embodiment.

Each of the structures or seals 101 and 1301, 3101, 3201 and 3301 has a flexible outer material with a first side part 102a, 1302a and a second side part 102b, 1302b, encompassing or enclosing a plurality of elongated metal members or metal wires 103, 1303, where each of the wires 103, 1303 run substantially in parallel to each other. Also each of the structures 3101, 3201 and 3301 has a flexible outer material 3102, 3202 and 3302, respectively, encompassing or enclosing a plurality of elongated metal members or metal wires 3103, 3203 and 3303. The wires 103, 1303, 3103, 3203 and 3303 run substantially in parallel to each other. The flexible structure or seal 101, 1301, 3101, 3201 and 3301 may have a substantial longitudinal extension, and the elongated metal members or metal wires 103, 1303, 3103, 3201 3303 may run substantially in the longitudinal direction of the structure or seal 101, 1301, 3101, 3201, 3301. The substantially parallel elongated metal members or metal wires 103, 1303, 3103, 3203, 3303 are arranged at a distance to each other, and it is preferred that the elongated metal members or metal wires 103, 1303, 3103, 3203, 3303 are arranged with a substantially equal spacing. It is preferred that the flexible outer material 102a, 102b, 1302a, 1303b, 3102, 3203, 3302 encompasses or encloses the parallel elongated metal members or metal wires 103, 1303, 3103, 3203, 3302 only.

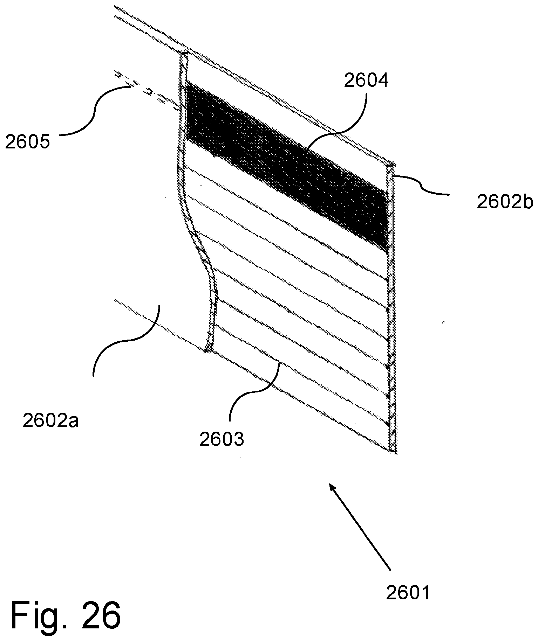

Fig. 26 is a partially cut away perspective view of a reinforced flexible structure or seal 2601 according to a third example embodiment. The structure 2601 is very similar to the structures 101 and 1301, and has a flexible outer material with a first side part 2602a and a second side part 2602b encompassing or enclosing a plurality of elongated metal members or metal wires 2603, where each of the wires 2603 run substantially in parallel to each other. The structure 2601 further holds one or more wide metal strips 2604, being encompassed or enclosed by the side parts 2602a, 2602b of flexible outer material. A wide metal strip 2604 may have a width in the range of the distance between two neighbouring elongated metal members or metal wires, or in the range of one to two or three times the distance between two neighbouring elongated metal members or metal wires. A metal strip 2604 may have a thickness substantial equal to the thickness or diameter of the elongated metal members or metal wires 2603.

The flexible structure or seal 2601 may have a longitudinal extension, and the elongated metal members or metal wires 2603 and the metal strip(s), 2604 may run substantially in the longitudinal direction of the structure or seal 2601. The substantially parallel elongated metal members or metal wires 2603 are arranged at a distance to each other, and it is preferred that the elongated metal members or metal wires 2603 are arranged with a substantially equal spacing. It is preferred that the flexible outer material 2602a, 2602b encompasses or encloses the parallel elongated metal members or metal wires 2603 and the one or more metal strips 2604 only.

The flexible outer material 102a, 102b, 1302a, 1302b, 2602a, 2602b, 3102, 3202, 3302 may have a flattened form with a substantially constant thickness. The flexible outer material 102a, 102b, 1302a, 1302b, 2602a, 2602b, 3102, 3202, 3302 may be made of a flexible polymer or plastic material, such as flexible polyvinyl chloride, PVC, and/or a flexible rubber material, and may have a thickness in the range of 2 to 30 mm, such as in the range of 2 to 20 mm, such as in the range of 2 to 10 mm, such as in the range of 2 to 5 mm, such as in the range of 2,5 to 4 mm, such as about 3 mm.

In order to use the structures or seals 101, 1301, 2601, 3101, 3201, 3301 as a seal barrier for vermin, such as rats or mice, the wires shall be dimensioned and made of a material, which the rats and/or mice cannot bite them a way through. Thus, the wires shall have a thickness and be made of a material, which the rats and/or mice cannot bite through, and also the distance between the wires shall be so small, that the rats and/or mice cannot move in between the wires.

The wires 103, 1303, 2603, 3103, 3203, 3303 may therefore be arranged at a distance to each other which is no larger than 20 mm, such as no larger than 19 mm, such as no larger than 18 mm, such as no larger than 17 mm, such as no larger than 15 mm, such as no larger than 12 mm, such as no larger than 10 mm, such as no larger than 9 mm, such as no larger than 8 mm, such as no larger than 7 mm, such as no larger than 6 mm, such as no larger than 5 mm, such as no larger than 4 mm, such as no larger than 3 mm, or such as no larger than 2 mm. Here, it is preferred that the distance between the wires 103, 1303 is equal to or no larger than 8 mm, equal to or no larger than 7 mm, equal to or no larger than 6 mm, equal to or no larger than 5 mm, or equal to or no larger than 4 mm.

The wires 103, 1303, 2603, 3103, 303, 3303 may be elongated metal members or metal wires having a smooth surface. However, it is preferred that the wires 103, 1303, 2603, 3103, 3203, 3302 are wires, which have an at least partly uneven and/or coated outer surface, including an at least partly deformed, roughed, coarse or surface treated outer surface. Examples of elongated metal members or metal wires having an at least partly uneven or deformed surface include wires having an at least partly fluted or grooved outer surface, wires having an at least partly chemically treated or etched outer surface, wires having an at least partly sandblasted outer surface, wires having an at least partly glass bead blasted outer surface, and wires having an at least partly shot blasted outer surface. Examples of elongated metal members or metal wires having an at least partly coated outer surface include wires being at least partly chromate coated, wires being at least partly coated by a deformed coating material, wires being at least partly coated by an adhesive coating, such as a brass alloy coating, and wires being at least partly coated by a primer coating.

It should be understood that the above-described embodiments of elongated metal members or metal wires having an at least partly uneven and/or coated outer surface, may be used as the reinforcing elongated metal members or metal wires in the different type of flexible structures or seals or seal combinations described in the present disclosure. Thus, the structure or seals or seal combinations 101, 201, 301, 501, 601a,b, 701a,b,c, 801, 1301, 1401a,b,c,d,e,f,g, 1501a,b, 1601, 1701a,b, 1801a,b, 1901, 001, 2101, 2201a,b, 2601, 2701a,b,c, 3101, 3201, 3301 may all include one or more of said elongated metal members or metal wires having an at least partly uneven and/or coated outer surface, and preferably all the elongated metal members or metal wires of these structures or seals may be elongated metal members or metal wires having an at least partly uneven and/or coated outer surface.

An embodiment of a wire having an at least partly uneven outer surface is shown in Fig. 1b, which shows an embodiment of a preferred uneven or deformed metal wire 103a having a number of deforming grooves 103aa. By having a fluted or grooved outer surface 103aa for the deformed metal wire 103a, an improved connection is obtained between the flexible material and the one or more deformed metal wires 103a, whereby the position of the one or more deformed metal wires 103a within the flexible material is maintained when the seal or structure is flexed from side to side. The grooves 103aa has an angle to the longitudinal extension of the wire 103a, where the angle may be in the range of 30° to 90°, such as at least 30°such as at least 40°, such as at least 50°, such as at least 60°, such as at least 70°, such as at least 80°, or such as about 90°.

The grooved wires 103a may be produced by a rolling or pressing process, such as a cold rolling process, using a roll processing system having a first pair of deforming rolls for pressing grooves in the two sides of the wire 103a and a second set of deforming rolls for pressing grooves at the top and at the bottom of the wire 103a. The wire 103a may be drawn through the first and second pairs of deforming rolls to thereby obtain a grooved outer surface, where the grooves 103aa are angled to the longitudinal direction of the wire 103a.

The wires 103, 103a, 1303, 2603, 3103, 3203, 3303 may be made of steel or stainless steel or spring steel, or the wires may be made of iron. The wires 103, 1303, 2603, 3103, 3203, 3303 may also be made as flexible metal wires, such as braided or twisted wires. The metal wires 103, 103a, 1303, 2603, 3103, 3203, 3303 can also be formed as narrow metal strips having a width, which may be substantially equal to the thickness of the narrow metal strips, or in the range of one to two or three times the thickness of the narrow metal strips.

When using spring steel for the metal wires or strips 103, 103a, 1303, 2603, 3103, 3203, 3303 the seal 101, 1301, 2601, 3101, 3201, 3301 gets an improved resistance against strokes or collisions.

The wires or thin metal strips 103, 103a, 1303, 2603, 3103, 3203, 3303 may have a thickness or diameter equal to or no less than 0,4 mm, equal to or no less than 0,6 mm, equal to or no less than 0,7 mm, equal to or no less than 0,8 mm, equal to or no less than 0,9 mm, equal to or no less than 1 mm, equal to or no less than 1,1 mm, equal to or no less than 1,2 mm, equal to or no less than 1,2 mm, equal to or no less than 1,3 mm, equal to or no less than 1,4 mm, equal to or no less than 1,5 mm, equal to or no less than 1,6 mm, equal to or no less than 1,7 mm, equal to or no less than 1,8 mm, equal to or no less than 1,9 mm, equal to or no less than 2,0 mm, equal to or no less than 2,1 mm, equal to or no less than 2,2 mm, equal to or no less than 2,4 mm, equal to or no less than 2,7 mm, or equal to or no less than 3 mm.

When the wires 103, 103a, 1303, 2603, 3103, 3203, 3303 are formed as metal strips, the metal strips may have a width equal to or no less than 1 mm, equal to or no less than 1,5 mm, equal to or no less than 2 mm, or equal to or no less than 2,5 mm.

The flexible structure 101, 1301, 2601, 3101, 3201, 3301 may have different widths, but when used for sealing, the structure 101, 1303, 2603, 3101, 3201, 3301 may have a width in the range of 1,5 to 30 cm, such as in the range of 2 to 25 cm, such as in the range of 2 to 20 cm, such as in the range of 2 to 15 cm, such as in the range of 4 to 10 cm, such as in the range of 5 to 9 cm, such as about 8 cm.

By having the metal wires 103, 1303, 2603, 3103, 3203, 3303 and the wide metal strip 2604 running substantially in parallel, the structure 101, 1303, 2603, 3101, 3201, 3301 can bend or flex about an axis being substantially parallel to the metal wires 103, 1303, 2603, 3103, 3203, 3303 whereas bending or flexing of the structure 101, 1301, 2601, 3101, 3201, 3301 about an axis perpendicular to the parallel metal wires 103, 1303, 2603, 3103, 3203, 3303 will be rather limited due to the stiffness of the metal wires 103, 1303, 2603, 3103, 3203, 3303.

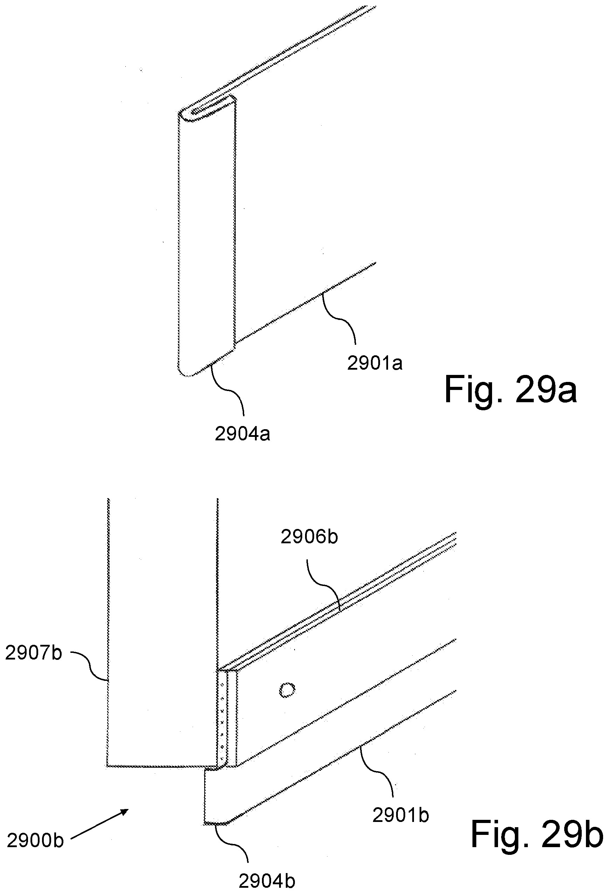

The structure or seal 3101 of Fig. 31 is substantially equal to the structure or seal 101 of Fig. 1a, but some metal wires 3103 may be omitted in the upper part of the structure 3101. One of the problems with the structures 101, 1301 and 3101 is that when the structure 101, 1301, 3101 is used for example as a door seal at the bottom of a door, the opening and closing of the door may bend the lower part of the structure 101, 1301, 3101 back and forth along an axis substantial parallel to the metal wires 103, 1303, 3103, which bending may cause the metal wires 103, 1303, 3103 to move relative to the flexible outer material 102, 1302, 3102. The result may be that for an end part of the structure 101, 1301, 3101, part of the metal wires 103, 1303, 3103 may extend outside the end part of the flexible outer material 102, 1302, 3102. A solution to this problem is illustrated by the structures or seals 2901a, 3201 and 3301 of Figs. 29a, 32 and 33, and further illustrated by the door assembly 2900b of Fig. 29b.

The metal wires 3203 and 3303 of the structures or seals 3201 and 3301 may be made of a relatively stiff material, such as steel or stainless steel, and by bending an end part 3204, 3304 of the structure 3201, 3301 and thereby an end part of the metal wires 3203, 3303, the wires 3203, 3303 may be locked within the structure 3201, 3301, and the wires 3203, 3303 may not be able to move relative to the flexible outer material 3202, 3302. The structure 3201 of Fig. 32 has a relatively large end part 3204 being bent, and this may cause a problem when using the seal 3201 as door seal, since the large end part 3204 may at least partly prevent the flexibility about an axis substantially parallel to the metal wires 3203. A solution to this problem is provided by the structure 3301 of Fig. 33. For the structure 3301, the width of the bent end part 3304 is smaller than the width of the end part 3204 of the structure 3201, and the bent end part 3304 may have a width or extension substantially equal to the thickness of the flexible outer material 3302. In a preferred embodiment, the width or extension of the bent end part 3304, which may be defined as the length of the bent end part of the metal wires 3303, may be no larger than 5 mm, such as no larger than 4 mm, such as no larger than 3 mm, or such a no larger than 2 mm. One possible method of providing the structure 3301 of Fig. 33 may be to first obtain a structure substantially equal to the structure 3201 of Fig. 32 having a relatively wide bent end part 3204, and then cut off the outer part of the end part 3204, as illustrated by the cut-off line 3205 in Fig. 32.

For the structures 3201, 3301, the wires 3203, 3303 within the bent end parts 3204, 3304 may be bent at angle of at least 30 °, such as at least 45°, such as at least 60°, such as at least 75°, or such as around 90°. However, it is also within embodiments that the wires 3203, 3303 are bent at an angle larger than 90°, such as at an angle in the range of 90° to 120°, or such as at an angle in the range of 120° to 180°. An embodiment of a reinforced flexible structure or seal 2901a having a bent end part 2904a, which is bent at an angle of about 180° is shown in Fig. 29a.

Fig. 29b shows a door assembly 2900b having a door wing 2907b with a reinforced flexible seal 2901b being secured to a bottom part of the door wing 2907b by use of a connecting plate 2906b. A lower part of the flexible seal 2901b extends below the lower edge of the door wing 2907b, and the extended lower part of the seal 2901b has a bent end part 2904, to thereby lock the metal wires within the flexible seal 2901b.

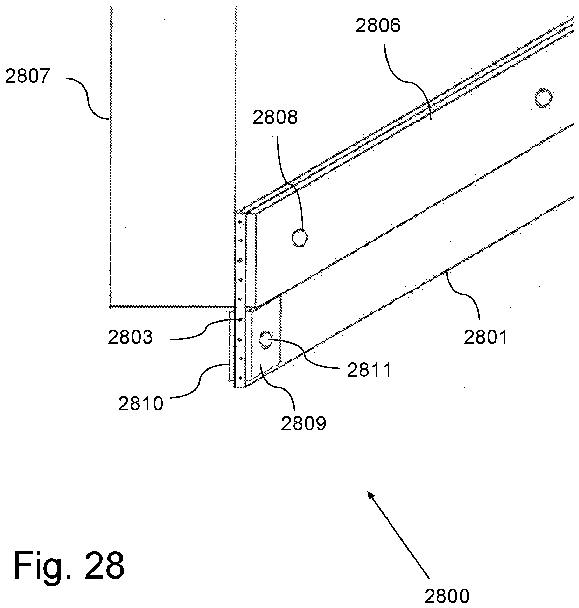

Another solution to the problem of movement of the metal wires within a reinforced flexible structure or seal according to the present disclosure is illustrated in Fig. 28, which shows a door assembly 2800 having a door wing 2807 with a reinforced flexible seal 2801 being secured to a bottom part of the door wing 2807 by use of a connecting plate 2806 and a connecting screw 2808. A number or metal wires 2803 are embedded in the flexible seal 2801 and reaches to the end of the seal 2801. A lower part of the flexible seal 2801 extends below the lower edge of the door wing 2807, and the extended lower part of the seal 2801 has two oppositely arranged metal plates orwasher plates 2809, 2810 mounted on each side of an end part of the seal 2801 by use of a bolt and nut 2811. The bolt and nut 2811 are tightened together in order to secure a pressure from the flexible outer material of the seal 2801 on the metal wires 2803, which will lock the metal wires within the flexible seal 2801.

Fig. 34 illustrates a reinforced flexible structure or seal 3401 having a number of rivets 3411 as pressure parts. In Fig. 34, an enlarged example of a rivet 3411 is shown in connected form and in disconnected form, showing a head 3411a and a tail 3411b of the example rivet 3411. When connected to the seal 3401, the head and tail of the rivet 3411 cover two metal wires 3403a, 3304b, and the head 3411a of the rivet 3411 is connected to the tail 3411b in order to provide a pressure from the flexible outer material of the seal 3401 on the metal wires 3403a, 3403b, which will lock the metal wires within the flexible seal 3401. An example of the connection of a rivet 3411 in the seal 3401 is illustrated by 3411c.

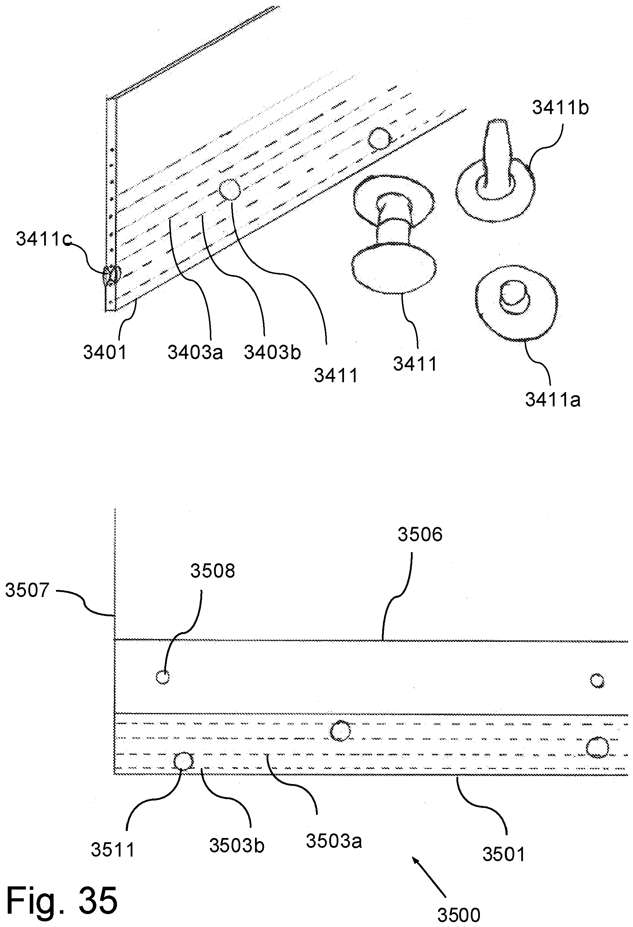

Fig. 35 illustrates a door assembly 3500 with a reinforced flexible seal 3501 provided with rivets 3511 as pressure parts. Each rivet 3511 provides a pressure on the flexible outer material of the seal 3501 on two metal wires 3503a, 3503b, which will lock the metal wires within the flexible seal 3501. The reinforced flexible seal or structure 3501 is connected to the lower part of a door wing 3507 by use of a connecting plate 3506 and connection screws 3508.

The flexible structure or seal 2801, 3410, or 3501 may be selected from the structures or seals illustrated and discussed in connection with Figs. 1, 13 and 26.

It should be understood that the structures or seals 2801, 2901a, 3201, 3301, 3401 and 3501 may have parallel metal wires 2803, 3203, 3302, 3403, 3503 in the whole width of the structures 2801, 2901a, 3201, 3301 or only in part of the structures, such as illustrated and discussed in connection with Figs. 1 and 13.

The main difference between the first structure or seal 101 and the second structure or seal 1301 is that for the first structure or seal 101, metal wires 103 are provided at a distance to each other in the whole width of the structure 101, while for the second structure or seal 1301, only a part of the structure or seal 1301 has metal wires 1303 running substantially parallel to each other.

Thus, the flexible structure or seal 1301 has a first section with a flexible outer material 1302a, 1302b encompassing or enclosing a plurality of metal wires 1303 running substantially parallel to each other, where the first section has a maximum width defined by the maximum distance between the two outermost positioned metal wires 1303 of the plurality of substantially parallel metal wires. The flexible structure or seal 1301 further has a second section arranged next to the first section alongside one of the outermost positioned metal wires 1303. The second section may also be formed by a flexible material, which may be the same material as used for the first section, and the second section holds no metal wires running substantially parallel to the metal wires 1303 of the first section.

When using the flexible structure 1301 as a seal connected to the edge of a door or a window, there is no need to have metal wires running in the part of the structure, which may be the second section, and which is used for connecting the structure 1301 to the door or window edge. Thus, there is only a need to have metal wires running in the part of the structure or seal, which may be the first section, and which is positioned below or besides the door or window edge. Thus, when connected to a door or window edge, the second section of the structure or seal 1301 may have width, which has a maximum corresponding to the width of a connecting plate used for connecting the seal 1301 to the door/window, whereby the second section may be fully covered by the connecting plate.

It is preferred that the second section of the structure or seal 1301 has a maximum width equal to or no less than one fifth of the maximum width of the first section, equal to or no less than one quarter of the maximum width of the first section, equal to or no less than one third of the maximum width of the first section, equal to or no less than half of the maximum width of the first section, equal to or no less than two thirds of the maximum width of the first section, equal to or no less than three quarters of the maximum width of the first section, or equal to or no less than the whole width of the first section.

In an embodiment the seal 1301 has a total width of about 75 mm, the width of the first section is 55 mm, the second section has a width of 17 mm, and the width from the bottom of the seal 1301 to the lowermost metal wire 1303 is 3 mm. Here, the seal 1301 has a thickness of 3 mm, the metal wires are made of stainless steel with a diameter of 1 mm, the distance between neighbouring metal wires 1303 is about 6 mm, and the total number of metal wires is 10.

The main difference between the first structure or seal 101 and the third structure or seal 2601 is that for the first structure or seal 101, metal wires 103 are provided at a distance to each other in the whole width of the structure 101, while for the third structure or seal 2601, only a part of the structure or seal 2601 has metal wires 2303 running substantially parallel to each other. The upper part of the seal 2601 is provide with at least one wide metal strip 2604. By having a wide metal strip 2604 encompassed, enclosed or embedded in the upper part of the structure or seal 2601, the seal 2601 can be secured or connected to a door or door edge without use of any separate metal plate connectors. The structure or seal 2601 can then be secured to the door or door edge by use of screws passing through the first side part 2602a, the wide metal plate 2604 and then through the second side part 2602b before entering the door material. The structure or seal 2601 may be provide with at least one track 2605 formed in the outer surface of the first side part 2602a of the seal, which track 2605 may be arranged substantially at the centre of the wide metal strip 2604. Such an arrangement of the track 2605 indicates where screws can be located when securing the seal 2601 to a door.

It is within an embodiment of the disclosure that the distance from the lowermost arranged metal wire 103, 1303, 2603, 3103, 3203, 3303 to the lower edge of the structure 101, 1301, 2601, 3101, 3201, 3301 is smaller than the distance between neighbouring arranged metal wires 103, 1303, 2603, 3103, 3203, 3303. Thus, the distance from the lowermost arranged metal wire 103, 1303, 2603, 3103, 3203, 3303 to the lower edge of the structure 101, 1301, 2601. 3101, 3201, 3301 may be in the range of 2/3 to 1/3 or about half or below half of the distance between neighbouring arranged metal wires 103, 1303, 2603, 3103, 3203, 3303. If the wires 103, 1303, 2603, 3103, 3203, 3303 for example are arranged at a distance to each other, which distance is at least 4 mm, such as 4 mm or 5 mm the distance from the lowermost arranged metal wire 103, 1303, 2603, 3103, 3203, 3303 to the lower edge of the structure 101, 1301, 2601, 3101, 3201, 3301 may be about 2 mm. If the wires 103, 1303, 2603, 3103, 3203, 3303 are arranged at a distance to each other which is about 6 mm, the distance from the lowermost arranged metal wire 103, 1303, 2603, 3103, 3203, 3303 to the lower edge of the structure 101, 1301, 2601, 3101, 3201, 3301 may be about 2 mm or 3 mm or in the range of 2-3 mm .

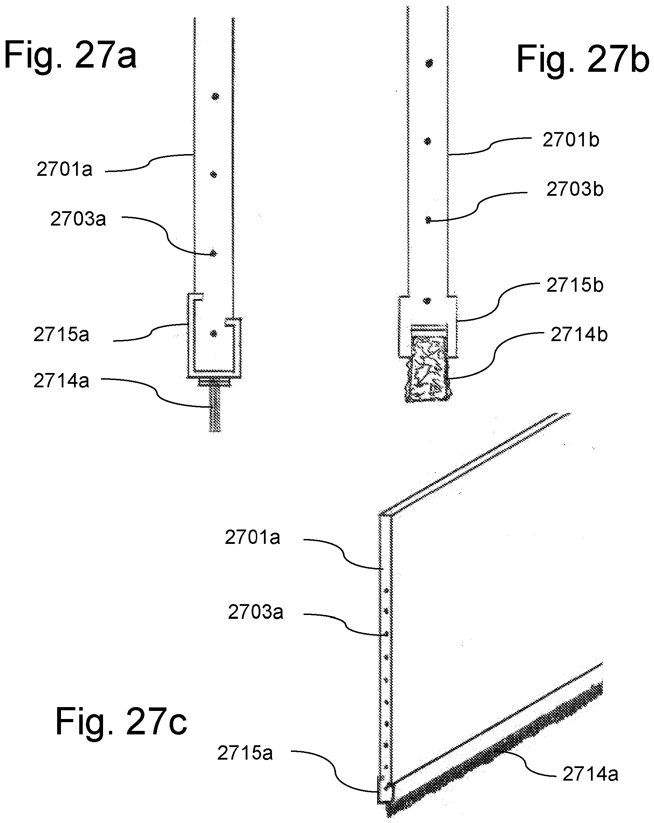

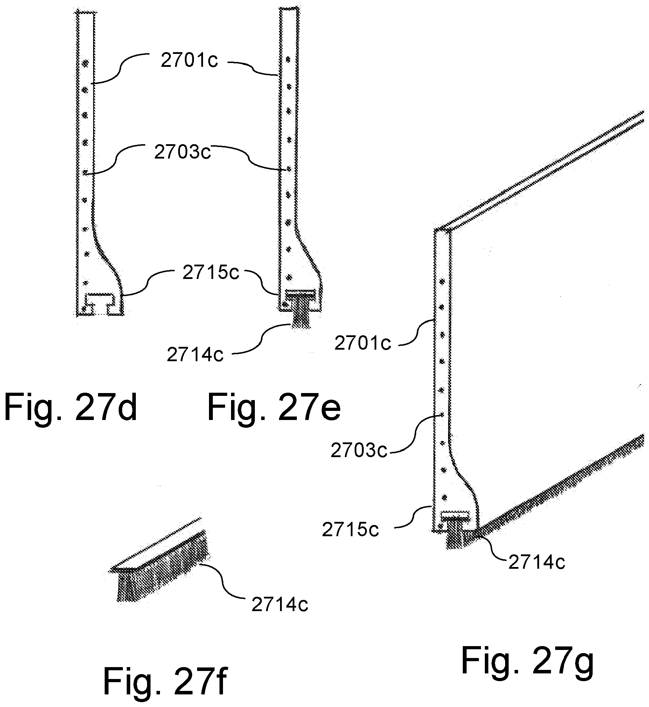

Figs. 27a - 27g illustrate embodiments of a seal combination comprising a reinforced flexible structure 2701a, 2701b, 2701c, and a brush or fibre material 2714a, 2714b, 2714c, such as a strip brush or bristle strip, at the bottom of the seal 2701a,b,c. The structure 2701a and the upper part of the structures 2701b and 2701c may be equal to any one of the seals 101, 1301 or 2601. Thus, the structures or seals 2701a, 2701b, 2701c have metal wires or strips 2703a, 2703b, 2703c encompassed by or embedded within a flexible outer material, and the structures 2701a, 2701b, 2701c may have any of the properties of the seals 101, 1301, and 2601. But the structures or seals 2701a, 2701b, 2701c are further provided with a connection part 2715a, 2715b, 2715c for holding or connecting the brush or fibre material 2714a, 2714b, 2714c below the bottom of the seal 2701a, 2701b, 2701c. For the structure 2701a, the connecting part \251ba may be a metal part, which itself protects the lower part of the flexible outer material, and it is preferred that the length of the brush or fibre material 2714a is no longer than the distance between two closest neighbouring metal wires 2703a. For the structure or seals 2701b and 2701c, the connecting part 2715b, 2715c may be formed in the flexible outer material, and it is preferred that the distance from the lowermost arranged metal wire 2703b, 2701c to the bottom of the brush or fibre material 2714b, 2714c is no longer than the distance between two closest neighbouring metal wires 2703b. By having a brush or fibre material 2714a, 2714b, 2714c at the bottom of the structure or seal 2701a, 2701b, 2701c, the seal combination can easily sweep on top of a ground surface, when the structure 2701a, 2701b, 2701c is connected to a door edge for sealing the space between the door edge and the ground surface. The brush or fibre material 2714a, 2714b, 2714c may be a plastic material, such as a nylon material, formed as a strip brush or bristle strip.

For the structure or seals 2701b and 2701c, a bottom groove may be formed in the lowermost surface of a bottom part of the structure, and the brush or fibre material 2714b, 2714c may be attached to the bottom part within said bottom groove. The brushes or strip of brushes 2714b, 2714c may be secured to a metal strip or within a metal channel strip, which metal strip may be arranged within the bottom groove, thereby holding the brushes in position at the bottom part of the flexible structure 2701b, 2701c. Thus, the brushes or strip of brushes 2714b, 2714c may be detachable arranged or attached to the bottom part of the flexible structure 2701b, 2701c.

In order to prevent pest such as rats or mice to intrude beneath a door being sealed by any of the above described seal combinations, the gap between a ground surface and the bottom of the reinforced flexible structure should be no larger than 6 mm, and preferably no larger than 5 mm or 4 mm.

In order to prevent pest such as rats or mice to gnaw through the reinforced flexible structure 2701a,b,c, it is important that the lowermost reinforcing metal wire 2703a,b,c is arranged close to the bottom edge of the structure. Thus, the spacing between said lower edge and a lowermost positioned metal wire should be no larger than 2, such as no larger than 1,5 mm, or such as no larger than 1 mm.

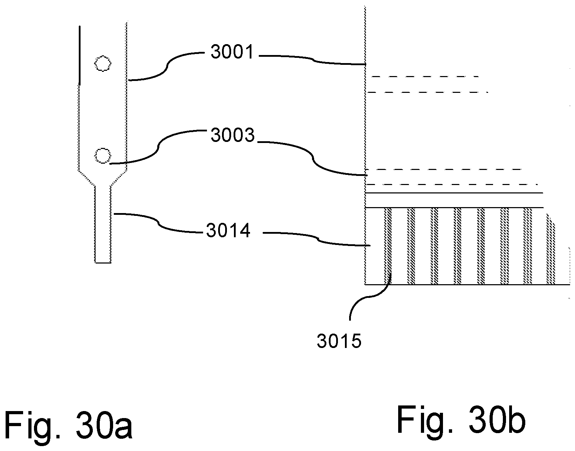

Figs. 30a and 30b illustrates a reinforced flexible structure or seal 3001 with a flexible cut-out part 3014 at the bottom according with a to an example embodiment. The structure or seal may be equal to any one of the seals 101, 1301 or 2601. Thus, the seal 3001 has metal wires or strips 3001 encompassed by or embedded within a flexible outer material, and the seal 3001may have any of the properties of the seals 101, 1301, and 2601. But for the seal 3001, vertical cuts 3015, as shown in Fig. 30b, are provided through the lowermost part of the flexible outer material below the lowermost arranged wire or strip 3003. The lowermost part of the flexible outer material may also be thinned, or have a thickness being smaller than the thickness of the upper part of the flexible outer material. By having the vertical cuts 3015, the lowermost part of the flexible outer material will act as a flexible brush or strip brush.

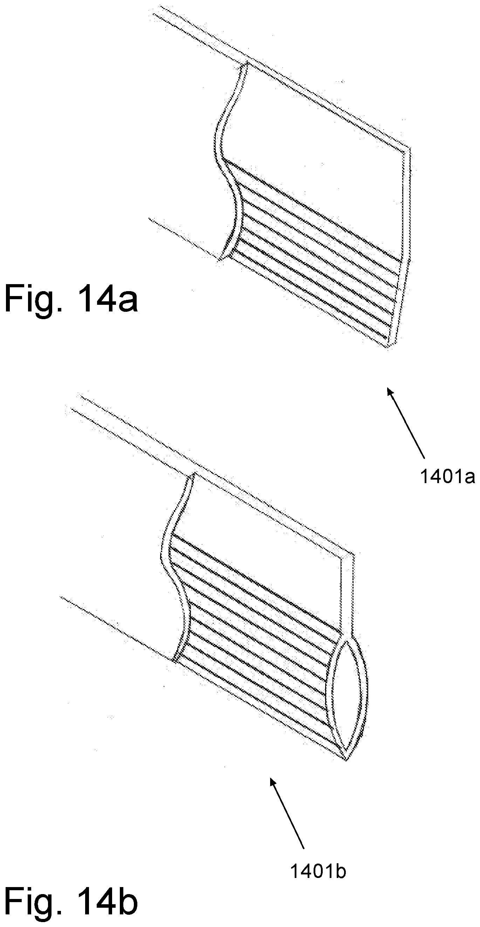

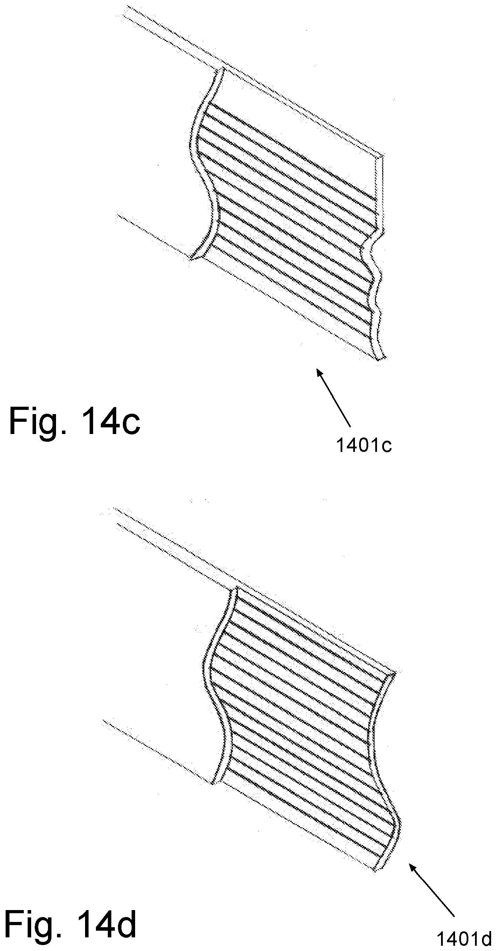

Figs. 14a, 14b, 14c and 14d shows partially cut away perspective views of reinforced flexible structures or seals 1401a, 1401b, 1401c and 1401d, according to example embodiments. The structure or seal 1401a of Fig. 14a is similar to the structure or seal 1301 of Fig. 13 in that the structure or seal 1401a has a first section with metal wires running substantially parallel to each other and a second section with no metal wires. The first section of the structure or seal 1401a is bent outwards or is at an angle relative to the second section, which holds no wires. Thus, when the structure 1401a is used as a door or port seal, the second section may be connected to the lower part or the edge of the door, while the first section extend below the door edge at an angle.

The structure or seal 1401b of Fig. 14b is similar to the structure or seal 1301 of Fig. 13 in that the structure or seal 1401b has a first section with metal wires running substantially parallel to each other and a second section with no metal wires. However, the first section is made up of a folded flexible material, providing an almost tubular shaped first section with a first and a second side. The folded flexible material may encompass or enclose metal wires in only one side or in both of the folded sides. The structure 1401b may for example be used as a seal for a garage port or door, such as a roller door.

The structure or seal 1401c of Fig. 14c is similar to the structure or seal 1301 of Fig. 13 in that the structure or seal 1401c has a first section with metal wires running substantially parallel to each other and a second section with no metal wires. For the structure 1401c, the width of the second section is smaller than the width of the first section. The first section of the structure or seal 1401c is formed with several curves to provide the first section with an improved flexibility when used for example as a door seal.

The structure or seal 1401d of Fig. 14d is similar to the structure or seal 101 of Fig. 1 in that the structure or seal 1401d has a metal wires running substantially parallel to each other in the whole width of the structure 1401d. The structure or seal 1401d is also formed with several curves to provide an improved flexibility when used for example as a door seal.

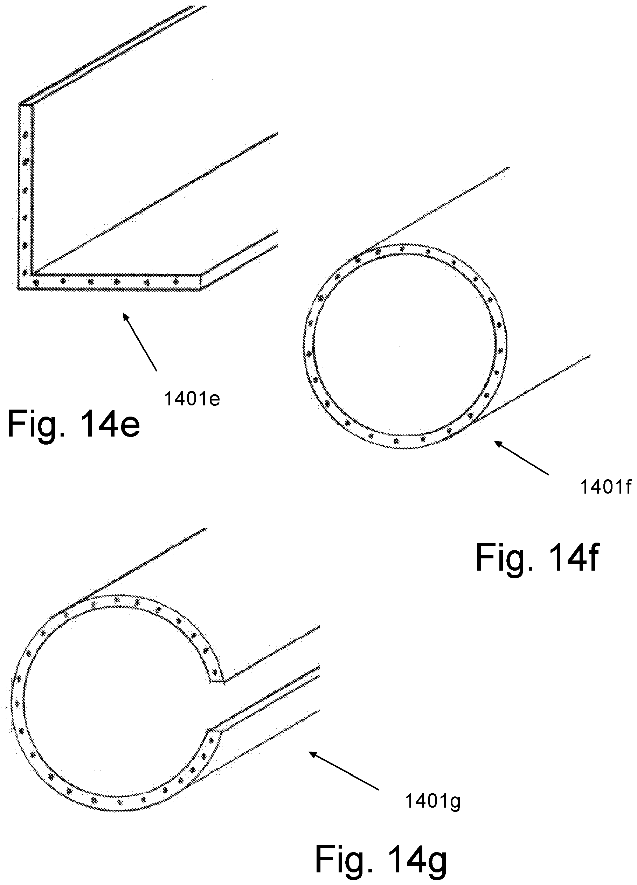

The present disclosure also covers embodiments of reinforced flexible structures or seals, which have other shapes than the flattened structures shown on Figs. 1, 13, 14a, 14b and 14c. This is illustrated in Figs. 14e, 14f, and 14g, where Fig. 14e shows a structure or seal 1401e, for which the flexible outer material is bent in an L-shape with two flattened forms with a substantially constant thickness. The seal 1401e may fo example be used as a seal between a wall and a fence. Fig. 14f shows a structure or seal 1401f, for which the flexible outer material is formed as a cylinder with open ends, and Fig. 14g shows a structure or seal 1401g, for which the flexible outer material is formed as a cylinder with open ends and with an open slit parallel to the cylinder axis. The flexible seals 1401f and 1401g can be used as compressed seals between two surfaces, where the compression may ensure that the sealing effect is maintained when the elasticity of the seals changes in time.

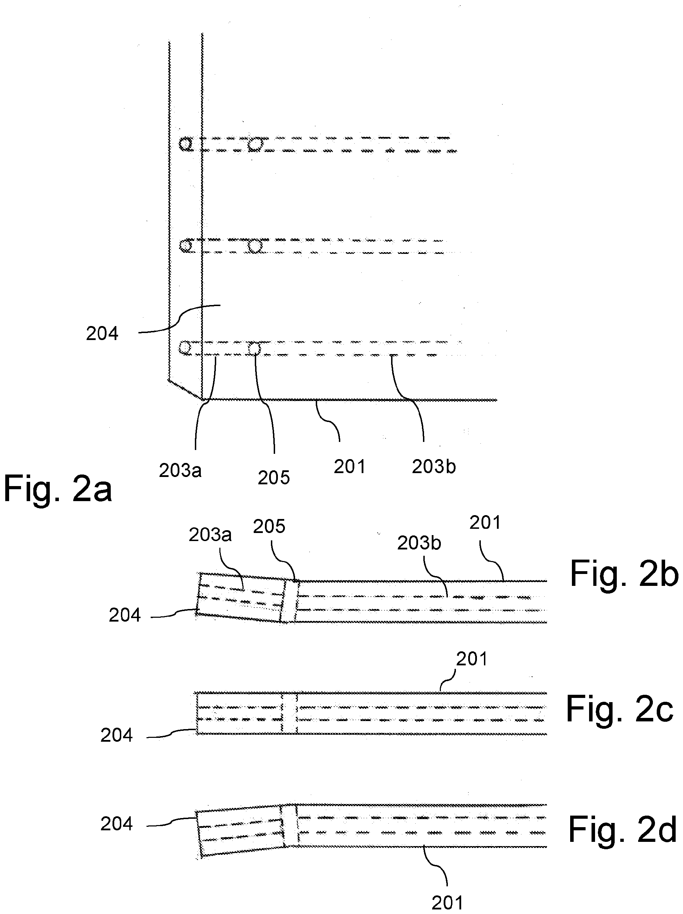

Figs. 2a to 2d illustrate a reinforced flexible structure or seal 201 with disconnected reinforcement wires 203a, 203b according to an example embodiment, where Fig. 2a is a partial perspective view of the structure 201, and Figs. 2b to 2d are partial top down views. The structure 201 of Figs. 2a to 2d is equal to the structure 101 of Fig. 1 or the structure 1301 of Fig. 13, with the exception that the metal wires 103, 1303 are disconnected into two parts 203a and 203b. Thus, the structure 201 comprises a first part 204 with parallel metal wires 203a and a remaining second part with parallel metal wires 203b, and the metal wires 203a of the first part 204 may be disconnected from the metal wires 203b of the second part along a disconnection line substantially perpendicular to the longitudinal direction of the substantially parallel wires 203a, 203b. Disconnection of the wires 203a, 203b may be performed by cutting through one or both side parts of the flexible structure 201, whereby cut through holes 205 may appear in the flexible material encompassing or enclosing the wires 203a, 203b, whereby a number of cut through holes 205 will appear along the disconnection line.

The structure 201 has the same flexibility around an axis being parallel to the metal wires 203a, 203a as the structure 101 of Fig. 1 and the structure 1301 of Fig. 13. However, due to the disconnection of the wires 203a, 203b, the first part 204 of the structure 201 can bend or flex relative to the remaining second part of the structure 201 about an axis perpendicular to the parallel metal wires 203a, 203b, which axis is defined by the disconnection line holding the through holes 205. This is illustrated in Figs. 2b to 2d, where Fig. 2c shows the first part 204 in a non-flexed position, Fig. 2b shows the first part 204 being flexed in a first direction, and Fig. 2c shows the first part 204 being flexed in a second direction opposite the first direction of Fig. 2b.

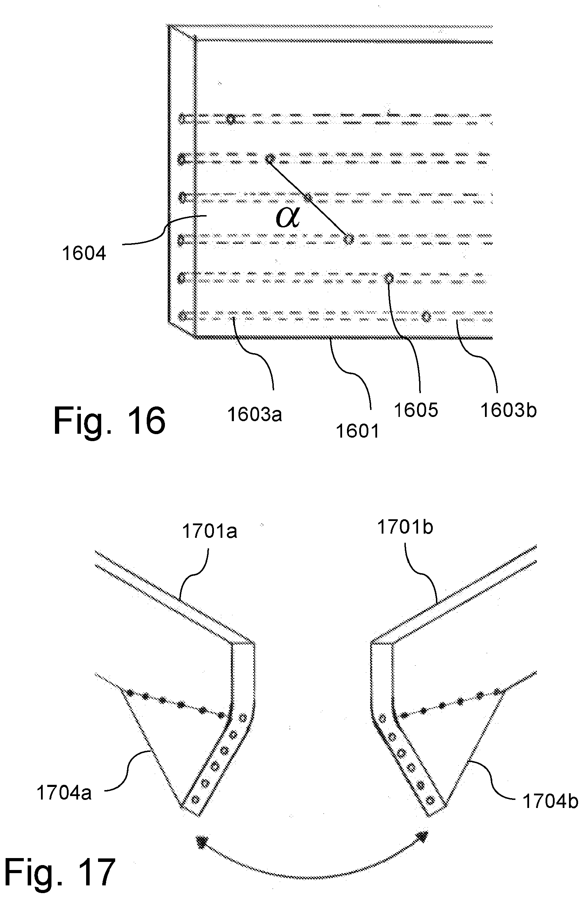

Fig. 16 illustrates a reinforced flexible structure or seal 1601 with disconnected reinforcement wires 1603a, 1603b according to an example embodiment. The structure 1601 of Fig. 16 is similar to the structure 201 of Fig. 2a, with the exception that the metal wires 1603a, 1603b are disconnected into the two parts 1603a and 1603b along a straight line, which is not perpendicular to the longitudinal direction of the substantially parallel wires 1603a, 1603b. Thus, the structure 1601 comprises a first part 1604 with parallel metal wires 1603a and a remaining second part with parallel metal wires 1603b, and the metal wires 1603a of the first part 1604 may be disconnected from the metal wires 1603b of the second part along a disconnection line, which is substantially straight and forms an acute angle α to the longitudinal direction of the substantially parallel wires 1603a, 1603b, where α may be in the range of 20° to 90°, such as in the range of 30° to 90°, such as in the range of 30° to 80°, such as in the range of 30° to 70°, such as in the range of 30° to 60° to the longitudinal direction of the substantially parallel wires 1603a, 1603b. Disconnection of the wires 1603a, 1603b may also here be performed by cutting through one or both side parts of the flexible structure 1601, whereby cut through holes 1605 may appear in the flexible material encompassing or enclosing the wires 1603a, 1603b, whereby a number of cut through holes 205 will appear along the disconnection line.

In order to use the structures 201 or 1601 as a seal barrier for rats or mice, the distance between the ends of the disconnected wires shall be so small, that the rats and/or mice cannot move in between the disconnected wires. Thus, the distance between the closest wire ends of two closest neighbouring and disconnected or separated metal wires of the first part 203a, 1603a and the second part 203b, 1603b shall be no larger than 20 mm, such as no larger than 19 mm, such as no larger than 18 mm, such as no larger than 17 mm, such as no larger than 15 mm, such as no larger than 12 mm, such as no larger than 10 mm, such as no larger than 9 mm, such as no larger than 8 mm, such as no larger than 7 mm, such as no larger than 6 mm, such as no larger than 5 mm, such as no larger than 4 mm, such as no larger than 3 mm, or such as no larger than 2 mm. Here, it is preferred that the distance between ends of the wires 203a and 203b or 1603a and 1603b is no larger than 5 mm, such as no larger than 4 mm.

Fig. 17 illustrates bending of two reinforced flexible structures or seals, 1701a and 1701b, which are similar to the structure 1601 of Fig. 16 according to an example embodiment. Both structures 1701a, 1701b has a first part 1704a, 1704b with parallel metal wires being disconnected from the metal wires in a remaining second part along a disconnection line having an acute angle α to the longitudinal direction of the parallel wires. Each first part 1704a and 1704b is bended relative to the remaining second part along the corresponding disconnection line.

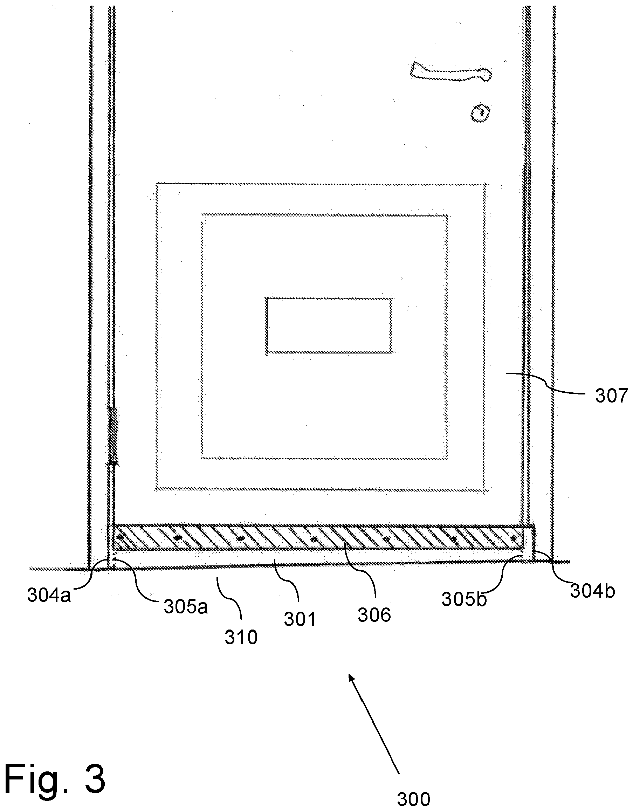

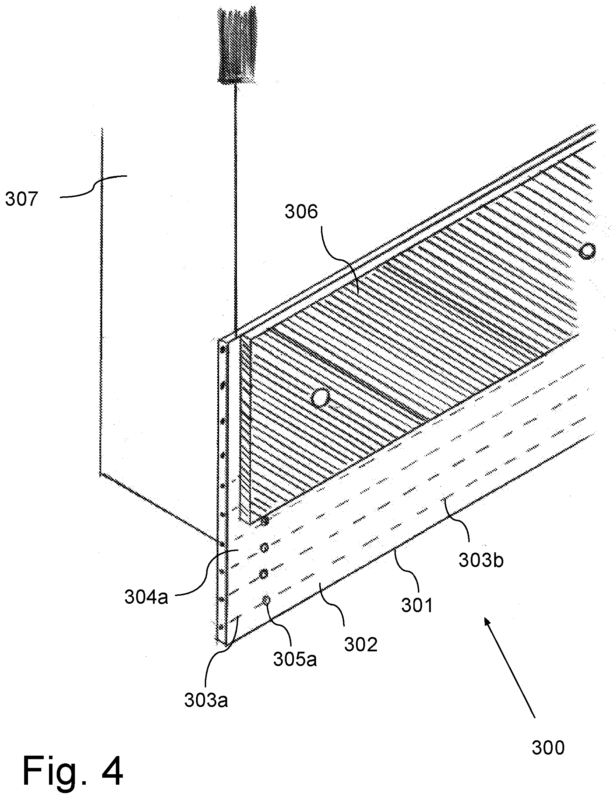

According to one or more embodiments of the disclosure, any of the flexible structures 101, 1301, 201, 1601, 2601, 2701a, 2701b, 2701c, 3101, 3201 or 3301 can be used for door sealing in order to prevent animals or vermin from entering at the perimeter of the door when shut. This is illustrated in Fig. 3, which is an isometric illustration of a lower edge door sealing assembly 300 according to an example embodiment, and in Fig. 4, which is an enlarged isometric illustration of a part of the lower edge door sealing assembly 300 of Fig. 3.

The seal assembly 300 of Figs. 3 and 4 is arranged for sealing a space between a lower edge of a door 307 and an adjacent surface 310 to avoid entrance of animals between the edge or lower edge of the door 307 and the surface 310. The seal assembly 300 comprises a flexible seal 301, which may be of the type 101, 1301, 2601, 2701a, 2701b, 270c, 3101, 3201 or 3301 as described in connection with Figs. 1, 13, 26, 27, 31, 32 and 33, or which may be of the type 201 as described in connection with Figs. 2a to 2d. Thus, the seal assembly 300 comprises a reinforced flexible seal 301 having a width and a length and comprising a flexible outer material 302 with a plurality of metal wires or strips 303a, 303b embedded therein and running in parallel to each other in a longitudinal direction of the reinforced flexible seal 301. The metal wires or strips 303a, 303b are arranged at a distance to each other, and the reinforced flexible seal 301 has a width for forming a seal between the edge of the door 307 and the surface 310. The metal wires or strips 303a, 303b may extend substantially parallel to the longitudinal direction of the lower edge of the door 307. The seal assembly 300 may have at least one connector or connecting plate 306, which may be made of steel or stainless steel, and which connects the reinforced flexible seal 301 to the edge of the door 307. The at least one connector may be a number of screws, which may be provided with washers, which are easier to transport than a connecting plate 306. The screw connectors are well suited when using a flexible seal 2601 as described in connection with Fig. 26. However, it is also within an embodiment that the seal assembly has no separate connector or connectors 306, and for this embodiment the seal 301 may be connected to the door 307 by gluing. Connecting by use of gluing is well suited for sealing of glass doors 307.

When using a connecting plate 306 for connection the seal 301 to a door 307, the connecting plate may be made of aluminium, but it is also within an embodiment that the connecting plate is made of spring steel. By using spring steel, the connecting plate 306 can be formed as a roll for transportation before being mounted to the door 307.

It is preferred that the reinforced flexible seal 301 has no other reinforcement means than the metal wires or strips 303a, 303b, and therefore only comprises the metal wires or strips 303a, 303b being surrounded by the flexible material 302. Also for the flexible seal 301 it is preferred that all the metal wires or strips 303a, 303b are arranged substantially parallel to each other, and it is also preferred that successively arranged substantially parallel metal wires 303a, 303b are arranged with substantially equal spacing.

When the flexible seal 301 is of the type 101, 1301, 2601, 2701a, 2701b, 2701c, 3101, 3201 or 3301 as described in connection with Figs. 1, 13, 26, 27, 31, 32 and 33, at least part or all of the metal wires or strips 303a, 303b extend in the whole length of the seal without any disconnection.

It is however within an embodiment that the flexible seal 301 is of the type 201 as described in connection with Figs. 2a to 2d. Here, the reinforced flexible seal 301 has a first flexible end part 304a with a first seal edge substantially perpendicular to the longitudinal direction of the reinforced flexible seal 301, and with the substantially parallel metal wires 303a of the first end part 304a being disconnected from the metal wires 303b running substantially in parallel within the reinforced flexible seal 301 next to the first end part 304a. The disconnection of the wires 303a and 303b may be made by cutting through one or both side parts 302 of the flexible structure 301, leaving cut through holes 305a in the encompassing or enclosing flexible material 302. The holes 305a may be arranged along a disconnection line substantially perpendicular to the longitudinal direction of the parallel wires 303a, 303b and at distance from the first seal edge. For the embodiment illustrated in Fig. 3, the seal 301 also has a second flexible end part 304b in the opposite end of the first flexible end part 304a. The second flexible end part has a second seal edge substantially perpendicular to the longitudinal direction of the reinforced flexible seal 301, and with the substantially parallel metal wires of the second end part 304b being disconnected from the metal wires 303b running substantially in parallel within the reinforced flexible seal 301 next to the second end part 304b. Also for the second end part 304b, the disconnection of the wires 303a and 303b may be made by cutting through one or both side parts 302 of the flexible structure 301, leaving cut through holes 305b in the encompassing or enclosing flexible material 302.

By having the flexible end parts 304a and 304b, the flexible seal 301 can be arranged with the end parts 304a, 304b extending on both sides of the door edge, to thereby obtain a close seal to the lower part of the frame of the door 307 to prevent animals or vermin from entering at the door frame when the door 307 is shut.

The adjacent surface 310 may extend in a plane substantially parallel to the door edge, and the surface 310 can for example be a ground surface, a floor surface, a concrete surface, or a door threshold.

Also for the flexible seal 301 of the seal assembly 300, it is preferred that the flexible outer material 302 has a flattened form with a substantially constant thickness, and that the outer material 302 is made of a flexible polymer or plastic material, such as flexible polyvinyl chloride, PVC, and/or of a flexible rubber material, and has a thickness in the range of 2 to 30 mm, such as in the range of 2 to 20 mm, such as in the range of 2 to 10 mm, such as in the range of 2 to 5 mm, such as in the range of 2,5 to 4 mm, such as about 3 mm. The wires 303a, 303b may be arranged at a distance to each other which is no larger than 20 mm, such as no larger than 19 mm, such as no larger than 18 mm, such as no larger than 17 mm, such as no larger than 15 mm, such as no larger than 12 mm, such as no larger than 10 mm, such as no larger than 9 mm, such as no larger than 8 mm, such as nor larger than 7mm, such as no larger than 6 mm, such as no larger than 5 mm, such as no larger than 4 mm, such as no larger than 3 mm, or such as no larger than 2 mm. It is preferred that the wires 303a, 303b are made of steel or stainless steel or spring steel having have a thickness or diameter equal to or no less than 0,4 mm, equal to or no less than 0,6 mm, equal to or no less than 0,7 mm, equal to or no less than 0,8 mm, equal to or no less than 0,9 mm, equal to or no less than 1 mm, equal to or no less than 1,1 mm, equal to or no less than 1,2 mm, equal to or no less than 1,2 mm, equal to or no less than 1,3 mm, equal to or no less than 1,4 mm, equal to or no less than 1,5 mm, equal to or no less than 1,6 mm, equal to or no less than 1,7 mm, equal to or no less than 1,8 mm, equal to or no less than 1,9 mm, equal to or no less than 2,0 mm, equal to or no less than 2,1 mm, equal to or no less than 2,2 mm, equal to or no less than 2,4 mm, equal to or no less than 2,7 mm, or equal to or no less than 3 mm. The wires 303a, 303b can also be made of iron with a diameter of no less than 0,9 mm, such as no less than 1 mm, such as a diameter of 1 mm, or such as a diameter of 1,1 mm. The flexible seal 301 may have a width in the range of 1,5 to 30 cm, such as in the range of 2 to 25 cm, such as in the range of 2 to 20 cm, such as in the range of 2 to 15 cm, such as in the range of 4 to 10 cm, such as in the range of 5 to 9 cm, such as about 8 cm. The distance between the first seal edge of the first end part 304a and the disconnection holes 305a, and thereby the width of the first end part 304a, may be in the range of 7 to 20 mm, such as in the range of 8 to 15 mm, such as about 10 mm. The width of the second end part 304b may be equal to the width of the first end part 304a.

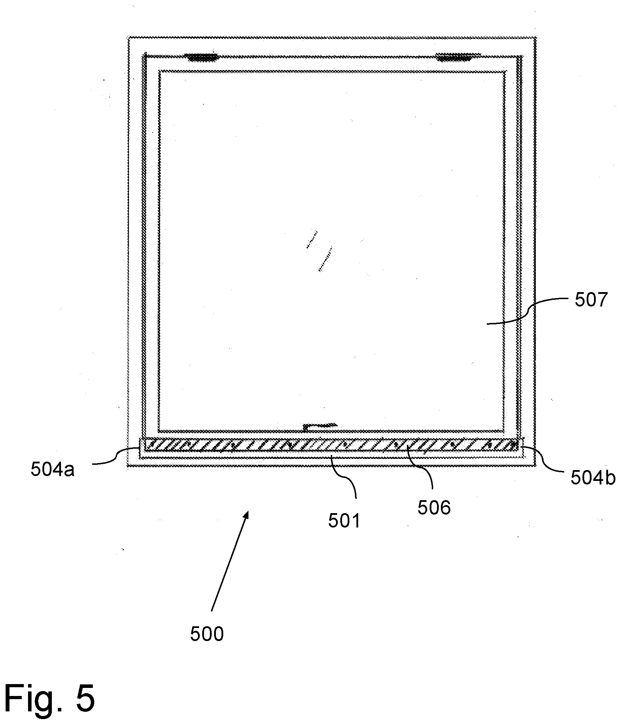

According to one or more embodiments of the disclosure, the flexible structure 101, 1301, 201, 2601, 3101, 3201, 3301 can also be used for sealing a window 507 in order to prevent animals or vermin from entering through the perimeter of the window 507 when shut. This is illustrated in Fig. 5, which shows a lower edge window sealing assembly 500 according to an example embodiment. It is preferred that sealing assembly 500 has a flexible seal 501 of the type as described in connection with Figs. 2a and 2b, and that the seal 501 is similar to the seal 301 of Figs. 3 and 4. The seal 501 is connected to a lower frame edge of the window 507 by a connecting plate 506, which may be made of steel or stainless steel, and the seal 501 has a first flexible end part 504a and an opposite second flexible end part 504b, where the metal wires of the end parts 504a and 504b are disconnected from the metal wires in the remaining part of the seal 501 similar to the end parts 304a and 304b of the seal 310.

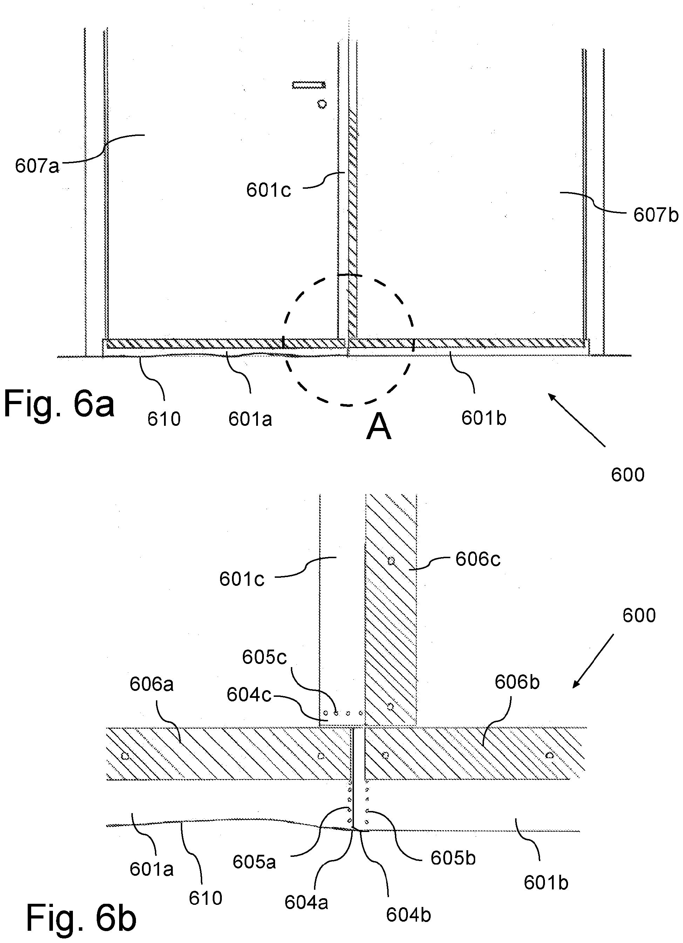

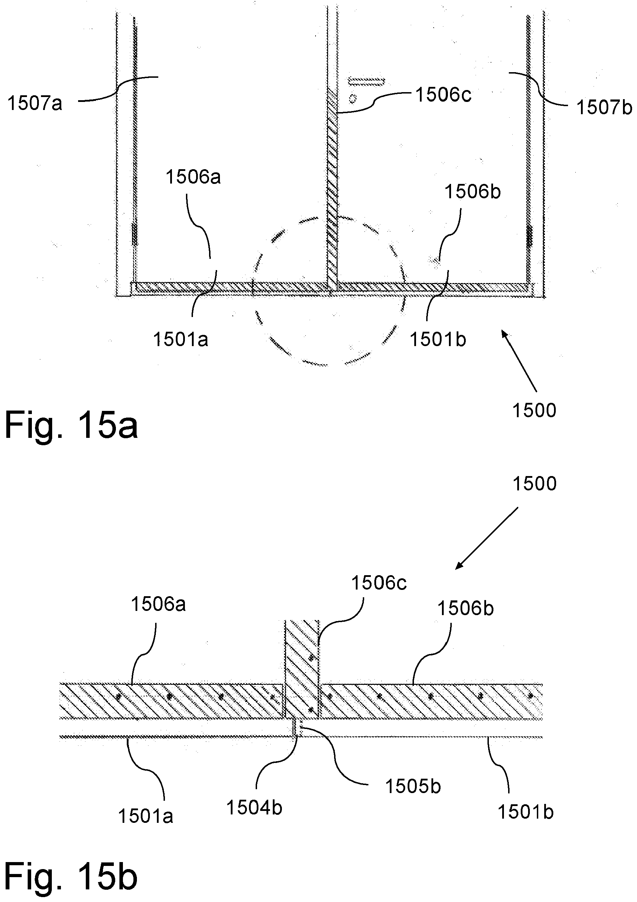

The sealing assembly 300 illustrated in Fig. 3 shows the sealing of a single door 307. It is also within embodiments of the disclosure to provide a sealing assembly of a door with two door wings. This is illustrated in Figs. 6a and 6b and Figs. 15a and 15b. Here, Figs. 6a and 6b illustrate a bottom sealed door assembly 600 having two oppositely arranged door wings or halves, a first door half 607a and a second 607b door half. Each door half 607a, 607b has a lower edge, wherein a first seal 601a is connected to the lower edge of the first door half 607a by a connecting plate 606a, and a second seal 601b is connected to the lower edge of the second door half 607b by a connecting plate 606b for sealing a space between the door edges and an adjacent surface 610 to avoid entrance of animals between the door edges and the surface. The first and second seals 601a and 601b may each be a flexible seal 601a, 601b, which may be of the type 101, 1301, 2601, 2701a, 2701b, 2701c, 3101, 3201 or 3303 as described in connection with Figs. 1, 13, 26, 27, 31, 32 and 33, or of the type 201 as described in connection with Figs. 2a to 2d. It is within an embodiment that each of the seals 601a, 601b are similar to the seal 301 of the assembly 300 of Fig. 3. Thus, each seal 601a and 601b may have a corresponding first flexible end part 604a and 604b, as shown in Fig. 6b, and an opposite second flexible end part (not shown in Fig. 6b), where the metal wires of the first end parts 604a and 604b are disconnected from the metal wires in the remaining part of the corresponding seal 601a and 601b by use of corresponding cut through holes 605a and 605b.

The sealed door assembly 600 is further provided with a vertical arranged flexible seal 601c connected to the second door half 607b by a connecting plate 606c for sealing any opening between the first and second door halves 607a and 607b when the door halves 607a and 607b are closed. The seal 601c may be of the type 101, 1301, 2601, 3101, 3201 or 3301, or the seal 601c may be of the type 201 as described in connection with Figs. 2a to 2d, and the seal 601c may have a first end part 604c with parallel metal wires being disconnected from the metal wires in the remaining part of the seal 601c by use of corresponding cut through holes 605c. The arrangement of the seal 601c on the second door half 607b allows the first door half 607a to be opened inwards or the second door half 607b to be opened outwards.

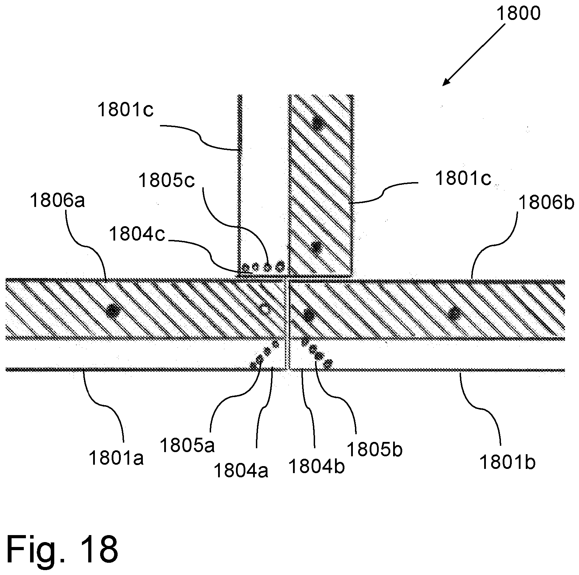

Fig. 18 illustrates another sealed door assembly 1800 with two door wings according to an example embodiment. The door assembly 1800 is similar to the door assembly 600 of Fig, 6b with the exception that the door wings have flexible seals 1801a and 1801b of the type 1601 illustrated in Fig. 16, where the disconnection line of the metal wires forms an acute angle to the longitudinal direction of the metal wires. Thus, each door half has a lower edge, wherein a first seal 1801a is connected to the lower edge of the first door half by a connecting plate 1806a, and a second seal 1801b is connected to the lower edge of the second door half by a connecting plate 1806b for sealing a space between the door edges and an adjacent surface to avoid entrance of animals between the door edges and the surface. The first and second seals 1801a and 1801b are of the type 1601 as described in connection with Fig. 16, and each seal 1801a and 1801b has a corresponding first flexible end part 1804a and 1804b, where the metal wires of the first end parts 1804a and 1804b are disconnected from the metal wires in the remaining part of the corresponding seal 1801a and 1801b by use of corresponding cut through holes 1805a and 1805b. The sealed door assembly 1800 may also be provided with a vertical arranged flexible seal 1801c connected to the second door half by a connecting plate 1806c for sealing any opening between the first and second door halves, when the door halves are closed. It is also preferred that the seal 1801c is of the type 201 as described in connection with Figs. 2a to 2d, and the seal 1801c may have a first end part 1804c with parallel metal wires being disconnected from the metal wires in the remaining part of the seal 1801c by use of corresponding cut through holes 1805c. The arrangement of the seal 1801c on the second door half allows the first door half to be opened inwards or the second door half to be opened outwards.

Figs. 15a and 15b illustrate yet another bottom sealed door assembly 1500 with two oppositely arranged door wings or halves, a first door half 1507a and a second 1507b door half. Also her, each door half 1507a, 1507b has a lower edge, wherein a first seal 1501a is connected to the lower edge of the first door half 1507a by a connecting plate 1506a, and a second seal 1501b is connected to the lower edge of the second door half 1507b by a connecting plate 1506b for sealing a space between the door edges and an adjacent surface to avoid entrance of animals between the door edges and the surface. The first and second seals 1501a and 1501b may each be a flexible seal 1501a, 1501b, which may be of the type 101, 1301, 3101, 3201 or 3301 as described in connection with Figs. 1, 13, 31, 32 and 33, or of the type 201 as described in connection with Figs. 2a to 2d. Here it is preferred that one or each of the seals 1501a, 1501b are similar to the seal 301 of the assembly 300 of Fig. 3. Thus, at alt least one seal 1501b may have a corresponding first flexible end part, where the end part 1504b of the seal 1501b is shown in Fig. 15b, and an opposite second flexible end part (not shown in Fig. 15b), where the metal wires of the first end part 1504b are disconnected from the metal wires in the remaining part of the seal 1501b by use of corresponding cut through holes 1505b.

The sealed door assembly 1500 is further provided with a vertical arranged connecting plate or stop plate 1506c connected to the second door half 1507b for closing any opening between the first and second door halves 1507a and 1507b when the door halves 1507a and 1507b are closed. Thus, the connecting plate or stop plate 1506c is arranged for allowing the second door half 1507b to be opened outwards.

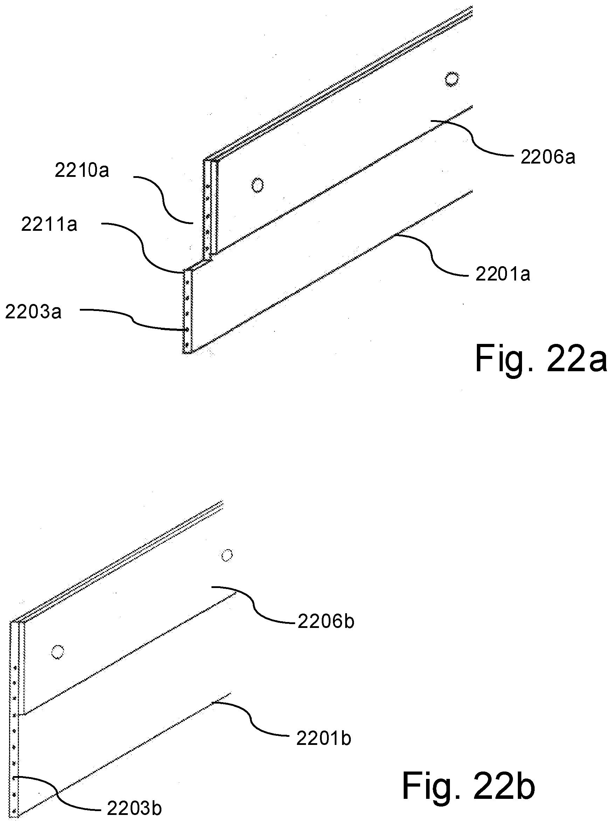

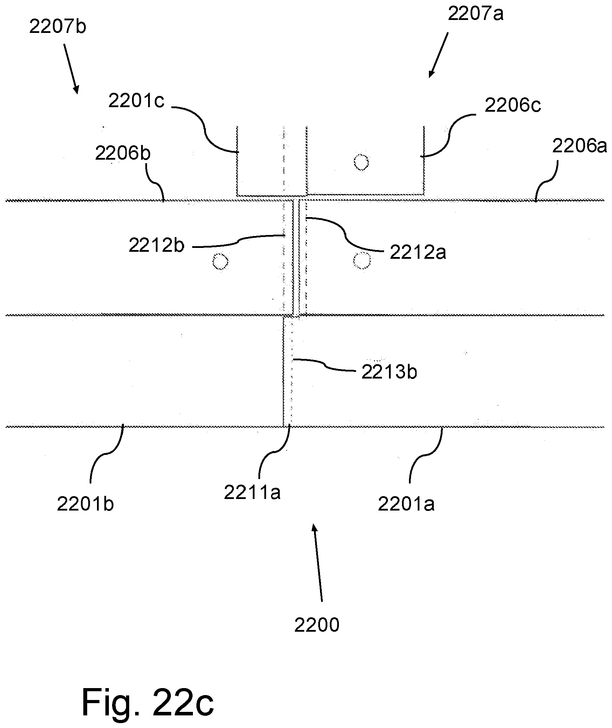

Figs. 22a and 22b illustrate seals 2201a and 2201b for a door assembly and Fig. 22c illustrates a sealed door assembly 2200 with two door wings using the seals 2201a and 2201b according to an example embodiment. The bottom sealed door assembly 2200 has two oppositely arranged door wings or halves, a first door half 2207a and a second 2207b door half. Each door half 2207a, 2207b has a lower edge, wherein a first seal 2201a is connected to the lower edge of the first door half 2207a by one or more first connectors or a connecting plate 2206a, and a second seal 2201b is connected to the lower edge of the second door half 2207b by one or more second connectors or connecting plate 2206b for sealing a space between the door edges and an adjacent surface to avoid entrance of animals between the door edges and the surface. The first and second seals 2201a and 2201b are each a flexible seal, which may be of the type 101, 1301, 2601, 2701a, 2701b, 2701c, 3101, 3201 or 3301 as described in connection with Figs. 1, 13, 26, 27, 31, 32 and 33.

The sealed door assembly 2200 is further provided with a vertical arranged flexible seal 2201c connected to the first door half 2207a by a connecting plate 2206c for sealing any upper opening between the first and second door halves 2207a and 2207b when the door halves 2207a and 2207b are closed. The seal 2201c also may be of the type 101, 1301, 2601, 3101, 3201 or 3301. The arrangement of the seal 2201c on the first door half 2207a allows the first door half 2207a to be opened outwards or the second door half 2207b to be opened inwards.

In order to obtain a close sealing between the seals 2201a and 2201b below the door halves 2207a and 2207b, when the door assembly 2200 is closed, the first flexible seal 2201a has a cut-out 2210a in the upper part of an end part of the seal 2201a with a first extending part 2211a in the lower part of the same end part of the seal 2201a. Thus, for the first door half 2207a, a lower part of the seal 2201a extends further in the longitudinal direction of the seal 2201a than the upper part of the seal 2201a. The cut-out 2210a allows the first seal 2201a and the second seal 2201b to be positioned on the door halves 2207a and 2207b, so that the upper end parts of the seal 2201a and 2201b may face each other with substantially no spacing, or a very small spacing, which will not allow rats and/or mice to get through. In order to secure that the rats and/or mice cannot get through the upper end parts of the seals 2201a, 2201b the connecting plates 2206a and 2206b may be positioned with the end parts of the connecting plates 2206a and 2206b facing each other with substantially no spacing, or a very small spacing, which will not allow rats and/or mice to get through. Thus, the spacing between the end parts of the connecting plates 2206a and 2206b should be no larger than 8 mm, or no larger than 7 mm, or no larger than 6 mm, or no larger than 5 mm, or no larger than 4 mm, or no larger than 3 mm, or no larger than 2 mm.

However, for the lower parts of the seals 2201a and 2201b, a flexibility is necessary for the door halves 2207a, 2207b to be opened, and not metal plates can be allowed for this part of the seals 2201a and 2201b.

But the seals 2201a and 2201b are positioned so that the first extending part 2211a of the first seal 2201a now overlaps the lower end part of the second seal 2201b, whereby an effective seal for entrance of rats and/or mice is obtained, while a high flexibility is maintained for opening and closing the door halves 2207a and 2207b. It is preferred that first extending part 2211a has width, which is substantially equal to the distance from the bottom of the first seal 2201a to the lower edge of the connecting plate 2206a. It is within one or more embodiments that the first extending part 2211a has a width of no less than one quarter, such as no less than on third, such as about half the width of the first flexible seal 2201a. It is also within one or more embodiments that the cut-out 2210a has a depth equal to the length of the first extending part 2211a, and that the depth of the cut-out is in the range of 5-20%, such as in the range of 7-15% of the width of the first flexible seal 2201.

It is within one or more embodiments that the cut-out 2210a has a depth equal to the spacing between the end parts of the connecting plates 2206a and 2206b plus an extra depth of no less than 1 mm, 2 mm, 3 mm, 4 mm, 5 mm, 6 mm, 7 mm, 8 mm, 9 mm, or no less than 10 mm.

In Figs. 22a and 22b also show that the metal wires or strips 2203a, 2203b of the seals 2201a, 2201b extend fully into the ends of the seals 2201a, 2201b, to thereby avoid entrance of rats and/or mice. In Fig. 22c it is further illustrated by the dotted lines that the first door half extend to the dotted line 2212a, while the second door half extend to the dotted line 2212b, thereby leaving a space between the door halves, equal to the distance between the dotted lines 2212a and 2212b, where the upper part of the space is covered by the seal 2201c, and the lower part of the space is covered by the seals 2201a and 2201b and the connecting plates 2206a and 2206b. A dotted line 2213b illustrates the end of the second seal 2201b, which is covered by the first extending part 2211a.

Also for the door assembly 2200, the connecting plates 2206a, 2206b may be made of aluminium, but it is also within one or more embodiments that the connecting plates 2206a, 2206b are made of steel, stainless steel, or spring steel. When using spring steel for the connection plates 2206a, 2206b, the plate 2206a of the first door half 2207a may be allowed to extend further in order to have an end part overlapping an end part of the plate 2206b of the second door half 2207b. The extension of the first plate 2206a may be equal to or follow the length of the first extending part 2211a.

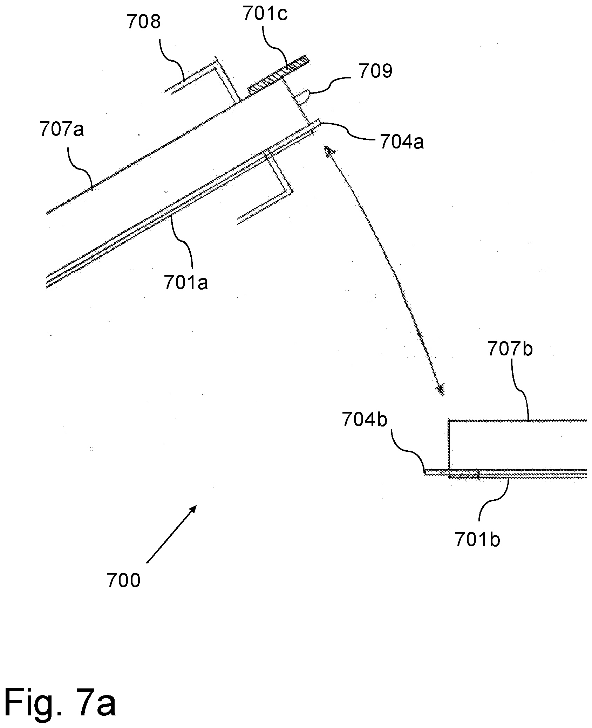

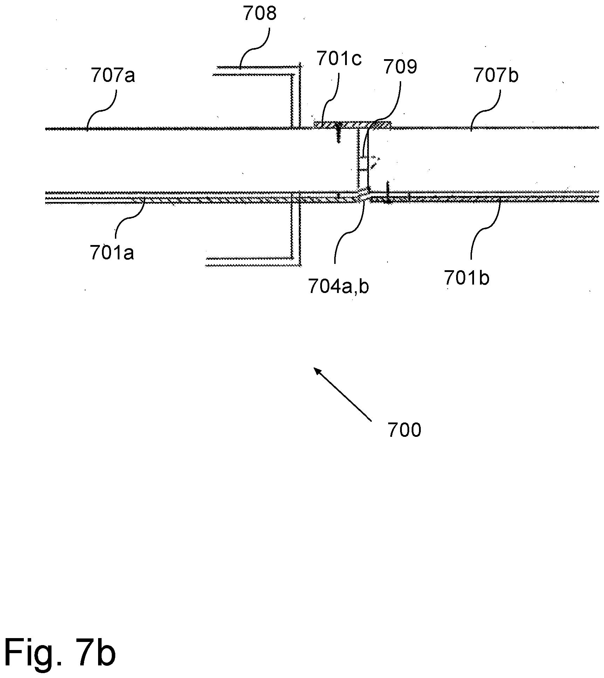

The sealed door assembly 600 of Figs. 6a and 6b has the vertical flexible seal 601c arranged on the same side of the assembly 600 as the lower door seals 601a and 601b. It is also within embodiments that the vertical seal can be arranged opposite to the bottom seals. This is illustrated in Figs. 7a and 7b, which are cut through views of a sealed door assembly 700 with two door wings 707a and 707b, where Fig. 7a shows the assembly 700 with open door halves 707a and 707b, and Fig. 7b shows the assembly 700 with closed door halves 707a and 707b. The door assembly 700 has a first door half 707a with a first flexible seal 701a and a second door half 707b with a second flexible door seal 701b. The door seals 701a and 701b are similar to the door seals 601a and 601b of the assembly 600, and the seals 701a and 701b are also provided with corresponding first flexible end parts 704a and 704b. The assembly 700 is further provided with a vertical stop strip or stop plate 701c, which is secured to the first door half 707a. The first door half 707a is provided with a door handle 708 and a latch bolt 709 for keeping the first door half 707a in a closed position relative to the second door half 707b. When the door halves 707a and 707b are in the closed position, the flexible end parts 704a and 707b may engage each other in an overlapping fashion, as shown in Fig. 7b, and thereby provide a closed sealing between the two bottom seals 701a and 701b.

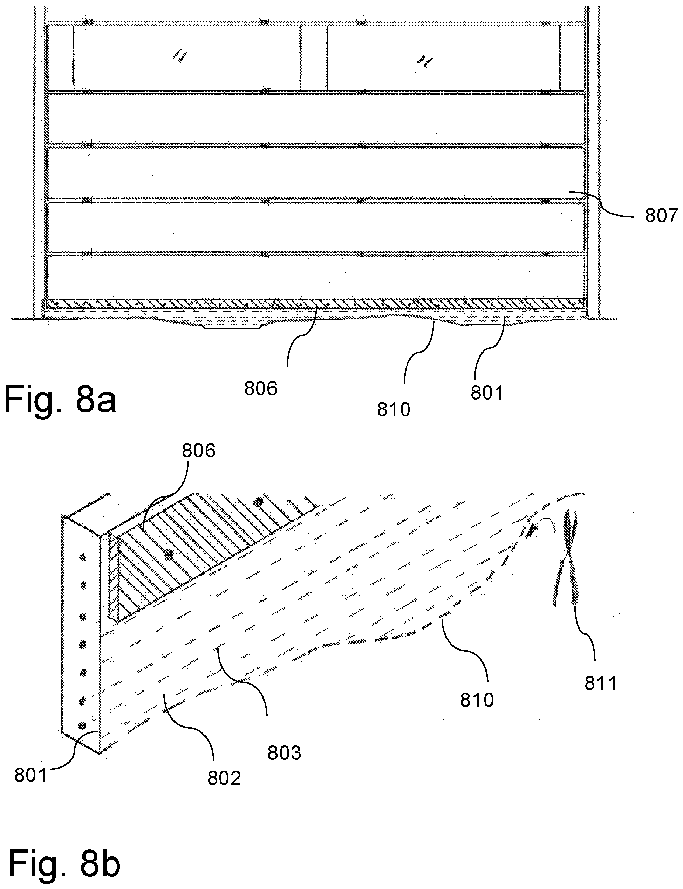

Figs. 8a and 8b illustrate sealing of a lower edge of a port, door or roller door 807 according to an example embodiment. The space between the port or door 807 and an adjacent surface 810 is sealed to avoid entrance of animals between the lower edge of the port or door 807 and the surface 810. The sealing is provided by use of a flexible seal 801, which may be of the type 101, 1301, 2601, 2701a, 2701b, 2701c, 3101, 3201 or 3301 as described in connection with Figs. 1, 13, 26, 27, 31, 32 and 33, or which may be of the type 201 as described in connection with Figs. 2a to 2d. Thus, the seal 801 comprises a flexible outer material 802 with a plurality of metal wires or strips 803 embedded therein and running substantially in parallel to each other in a substantial longitudinal direction of the reinforced flexible seal 801. The flexible seal 801 may be connected to the port or door 807 by one or more connectors or a connecting plate 806 with the metal wires or strips 803 extending substantially parallel to the longitudinal direction of the lower edge of the port or door 807.

However, the surface 810 may be uneven, which may rise a problem in obtaining a close sealing of the space between the edge of the port or door 807 and the surface 810, when the port or door 807 is in the closed position. This problem can be solved, as illustrated in Fig. 8b, by cutting an edge part of the reinforced flexible seal 801, which edge part faces the adjacent surface 810, where the cutting is performed to have the resulting cut edge part substantially following the adjacent surface 810 when the port of door 807 is in a closed position. The cutting may be performed by use of a pair of scissors or a wire cutter 811, which should be able to cut through both the flexible outer material 802 and the metal wires 803, depending on the irregularity of the surface 810.

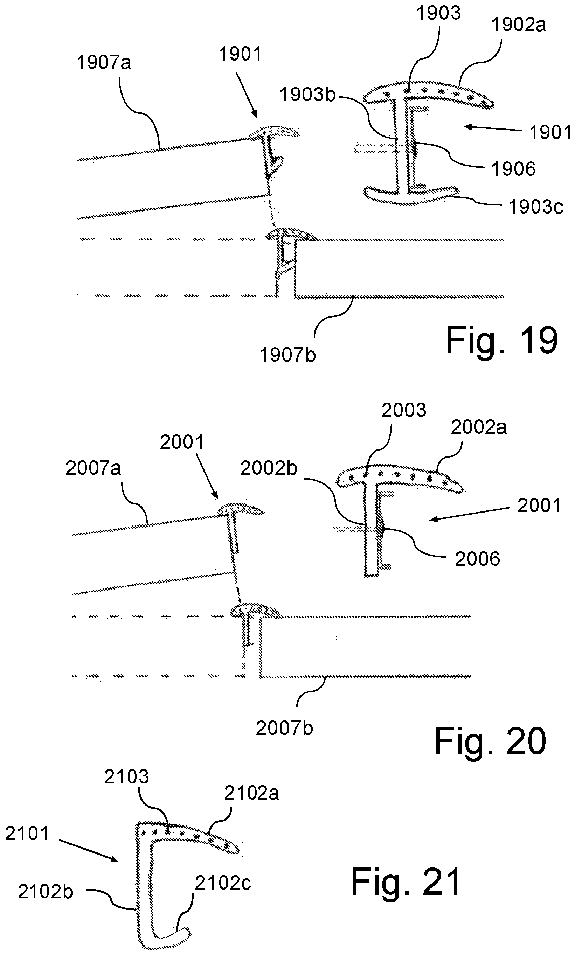

Fig. 19 shows a cross-sectional view of a reinforced flexible structure or seal 1901 according to an example embodiment. The structure or seal 1901 may be used as a seal for a door assembly having first and second parts 1907a, 1907b, where the first part 1907a may be a movable part, to which the seal 1901 may be connected by a connecting plate 1906. The moveable door part 1907a may be a door or port of a container. The seal 1901 has a first section 1902a, a second section 1902b and a third section 1903c. The first section 1902a is made of a flexible material with a plurality of reinforcing metal wires 1903 embedded therein. It is preferred that the second and third sections 1902b and 1902c are made of the same flexible material as the first section 1902a. The cross-sectional form of the first and second sections 1902a and 1902b may form a T-like shape, and also the cross-sectional form of the third and second sections 1902c and 1902b may form a T-like shape. The second section 1902b may extend in a direction substantially perpendicular or close to perpendicular to the direction of extension of the first section 1902a, and the third section 1902c is secured to the second section 1902b opposite and substantially parallel to the first section 1902a. Thus, the second section 1902b extends in a direction substantially perpendicular or close to perpendicular to the direction of extension of the third section 1902c. The second section 1902b forms a wall part, and when the seal 1901 is secured to a first door part 1907a, a first side wall of the second section 1902b faces an end wall of the first door part 1907a, and the second side wall of the second section 1902b may face an end wall of the second door part 1907b. The first and third sections 1902a and 1902c extend on both sides of the second section 1902b, but with a larger part of the first and third sections 1902a and 1902c extending to the side of the second side wall of second section 1902b. The first section 1902a has a larger part extending to the side of the second side wall of the second section 1902b than the third section 1902c, whereby the first section 1902a has an extension being large enough to provide a seal between the two door parts 1907a and 1907b when the moveable first door part 1907a is closed to the second door part 1907b.

Fig. 20 is a cross sectional view of a reinforced flexible structure or seal 2001 according to another example embodiment. The structure or seal 2001 may be also be a seal for a door assembly having first and second parts 2007a, 2007b, where the first part 2007a may be a movable part, to which the seal 2001 may be connected by a connecting plate 2006. The moveable door part 2007a may be a door or port of a container. The seal 2001 is similar to the seal 1901 of fig. 19 and has a first section 2002a and a second section 2002b, but the seal 2001 does not hold a third section as section 1902c of the seal 1901. Also for the seal 2001, the first section 2002a is made of a flexible material with a plurality of reinforcing metal wires 2003 embedded therein. It is preferred that the second section 2002b is made of the same flexible material as the first section 2002a. The cross-sectional form of the first and second sections 2002a and 2002b may form a T-like shape, and the second section 2002b may extend in a direction substantially perpendicular or close to perpendicular to the direction of extension of the first section 2002a. The second section 2002b forms a wall part, and when the seal 2001 is secured to a first door part 2007a, a first side wall of the second section 2002b faces an end wall of the first door part 2007a, and the second side wall of the second section 2002b may face an end wall of the second door part 2007b. The first section 2002a extends on both sides of the second section 2002b, but the first section 2002a may have a larger part extending to the side of the second side wall of the second section 2002b, whereby the first section 2002a may have an extension being large enough to provide a seal between the two door parts 2007a and 2007b when the moveable first door part 2007a is closed to the second door part 2007b.

Fig. 21 is a cross sectional view of a reinforced flexible structure or seal 2101 according to yet another example embodiment. The structure or seal 2101 is rather similar to the seal 1901 of Fig. 19 and may be used as a seal for the door assembly of Figs. 19 replacing the seal 1901. The seal 2101 has a first section 2102a, a second section 2102b and a third section 2103c. The first section 2102a is made of a flexible material with a plurality of reinforcing metal wires 2103 embedded therein. It is preferred that the second and third sections 2102b and 2102c are made of the same flexible material as the first section 2102a. The cross-sectional form of the first and second sections 1902a and 1902b may form an L or J-like shape, and also the cross-sectional form of the third and second sections 1902c and 1902b may form an L or J-like shape, where both the first and third sections 2102a and 2102c extend to the same side of the second section 2102b. The first section 2102a has a larger part extending to the side of the second section 2102b than the third section 2102c, whereby the first section 2102a has an extension being large enough to provide a seal between the two door parts 1907a and 1907b when replacing the seal 1901.

When compared to flexible structures or door seals without any reinforcing wires, the structure or seals 1901, 2001 and 2101 having first sections 1902a, 2002a, 2102a with reinforcing wires will be stronger in use and will not be so easily damaged for example by a truck hitting the seal 1901, 2001, 2101.

It is preferred that the reinforcing metal wires 1903, 2003, 2103 are provided in the first seal section 1902a, 2002a, 2102a only. The metal wires 1903, 2003, 2103 may be dimensioned similar to the proposed dimensions of the wires of the structures 101 and 1301, and the wires 1903, 2003, 2103 may also be arranged within in the first seal section 1902a, 2002a, 2102a similar to the proposed arrangements of the wires of the structures 101 and 1301.

The flexible structure or seal 1901, 2001, 2001 may have a longitudinal extension, and the metal wires 1903, 2003, 2103 may run substantially in the longitudinal direction of the structure or seal 1901, 2001, 2101. The substantially parallel metal wires 1903, 2003, 2103 may be arranged at a distance to each other, and it is preferred that the metal wires 1903, 2003, 2103 are arranged with a substantially equal spacing. The flexible outer material of the first sections 1902a, 2002a, 2102a may have a flattened form with a substantially constant thickness. The flexible outer material of the first sections 1902a, 2002a, 2102a may be made of a flexible polymer or plastic material, such as flexible polyvinyl chloride, PVC, and/or a flexible rubber material, such as a thermoplastic elastomer, TPE, type material, such as a thermoplastic vulcanizates, TPV, type material. In an embodiment the polymer containing material is Santoprene™, such as Santoprene 201-73. The flexible outer material of the first sections 1902a, 2002a, 2102a may have a thickness in the range of 2 to 30 mm, such as in the range of 2 to 20 mm, such as in the range of 2 to 10 mm, such as in the range of 2,5 to 8 mm, such as in the range of 3 to 6 mm, such as about 4 or 5 mm.

In order to use the structures or seal 1901, 2001, 2101 as a seal barrier for vermin, such as rats or mice, the wires 1903, 2003, 2103 shall be dimensioned and made of a material, which the rats and/or mice cannot bite them a way through. Thus, the wires shall have a thickness and be made of a material, which the rats and/or mice cannot bite through, and also the distance between the wires shall be so small, that the rats and/or mice cannot move in between the wires.

The wires 1903, 2003, 2103 may be therefore be arranged at a distance to each other which is no larger than 20 mm, such as no larger than 19 mm, such as no larger than 18 mm, such as no larger than 17 mm, such as no larger than 15 mm, such as no larger than 12 mm, such as no larger than 10 mm, such as no larger than 9 mm, such as no larger than 8 mm, such as no larger than 7 mm, such as no larger than 6 mm, such as no larger than 5 mm, such as no larger than 4 mm, such as no larger than 3 mm, or such as no larger than 2 mm. Here, it is preferred that the distance between the wires 1903, 2003, 2103 is no larger than 5 mm, such as no larger than 4 mm.

The wires 1903, 2003, 2103 may be made of steel or stainless steel or spring steel, or the wires may be made of iron. The wires 1903, 2003, 2103 may also be made flexible metal wires, such as braided or twisted wires. The metal wires 1903, 2003, 2103 can also be formed as narrow metal strips having a width, which may be substantially equal to the thickness of the narrow metal strips, or in the range of one to two or three times the thickness of the narrow metal strips.

When using spring steel for the metal wires or strips 1903, 2003, 2103, the first seal section 1902a, 2002a, 2102a gets an improved resistance against strokes or collisions.

The wires or thin metal strips 1903, 2003, 2103 may have a thickness or diameter equal to or no less than 0,4 mm, equal to or no less than 0,6 mm, equal to or no less than 0,7 mm, equal to or no less than 0,8 mm, equal to or no less than 0,9 mm, equal to or no less than 1 mm, equal to or no less than 1,1 mm, equal to or no less than 1,2 mm, equal to or no less than 1,2 mm, equal to or no less than 1,3 mm, equal to or no less than 1,4 mm, equal to or no less than 1,5 mm, equal to or no less than 1,6 mm, equal to or no less than 1,7 mm, equal to or no less than 1,8 mm, equal to or no less than 1,9 mm, equal to or no less than 2,0 mm, equal to or no less than 2,1 mm, equal to or no less than 2,2 mm, equal to or no less than 2,4 mm, equal to or no less than 2,7 mm, or equal to or no less than 3 mm.

When the wires 1903, 2003, 2103 are formed as metal strips, the metal strips may have a width equal to or no less than 1 mm, equal to or no less than 1,5 mm, equal to or no less than 2 mm, or equal to or no less than 2,5 mm.

The first sections 1902a, 2002a, 2102a may have different widths, but when used for sealing, the first sections 1902a, 2002a, 2102a may have a width in the range of 1,5 to 30 cm, such as in the range of 2 to 25 cm, such as in the range of 2 to 20 cm, such as in the range of 2 to 15 cm, such as in the range of 4 to 10 cm, such as in the range of 5 to 9 cm, such as about 8 cm.

By having the metal wires 1903, 2003, 2103 running substantially in parallel, the first sections 1902a, 2002a, 2102a can bend or flex about an axis being substantially parallel to the metal wires 1903, 2003, 2103, whereas bending or flexing of the first section 1902a, 2002a, 2102a about an axis perpendicular to the parallel metal wires 1903, 2003, 2103 may be rather limited due to the stiffness of the metal wires 1903, 2003, 2103 when using steel or stainless steel wires. However, it is within a preferred embodiment that the wires 1903, 2003, 2103 are flexible metal wires, such as braided or twisted wires, which can be bend in all directions, whereby the first sections 1902a, 2002a, 2102a can bend in all or several directions.

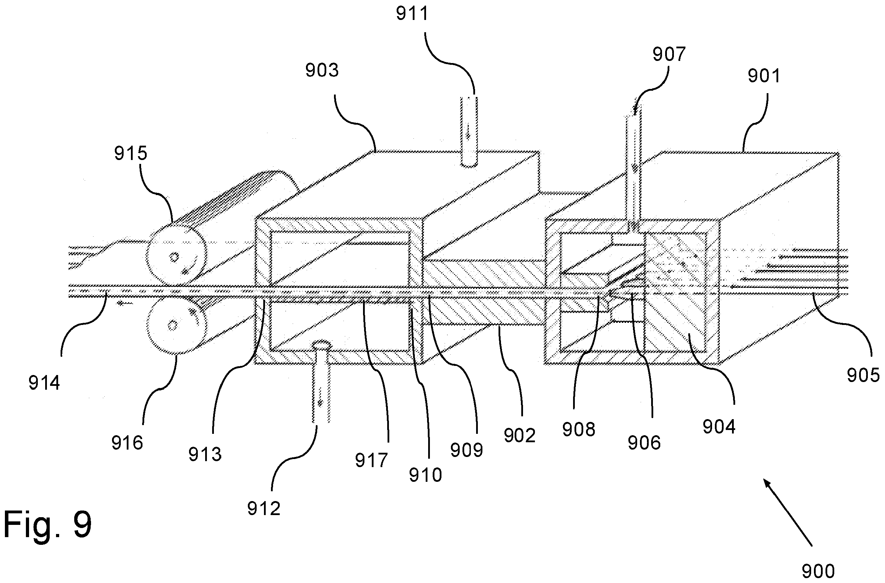

The present disclosure covers one or more embodiments, in which the reinforced flexible seal 101, 1301, 2601, 3101, 3201 and 3301 is produced by an extrusion process or by an insert molding process. In a molding process, the metal wires or strips 103, 1303, 2603, 3103, 3203, 3301 may be positioned in a mold, followed by injection of a molten polymer material, which is then followed by a solidifying process. The extrusion process may be performed by use of one of the systems and methods described in the following in connection with Figs. 9 to 12 and Figs. 23 to 25.

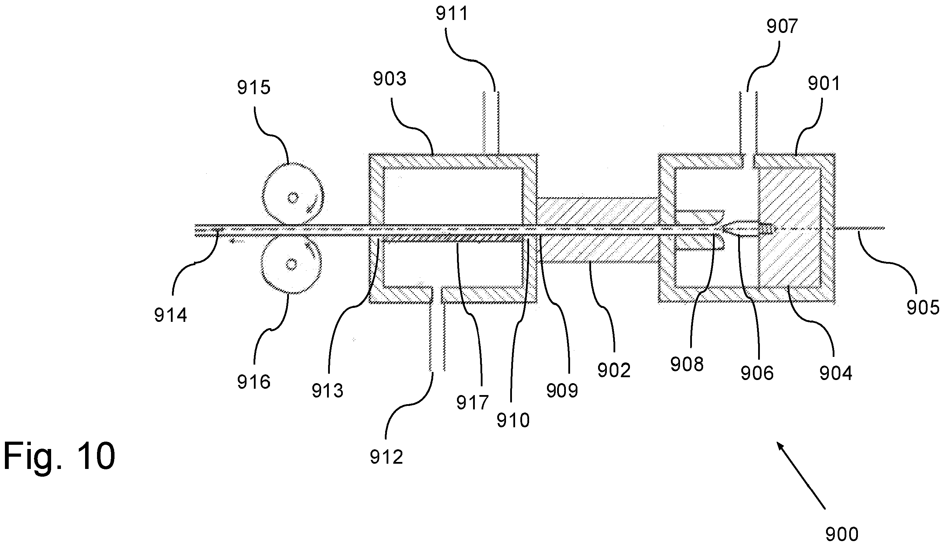

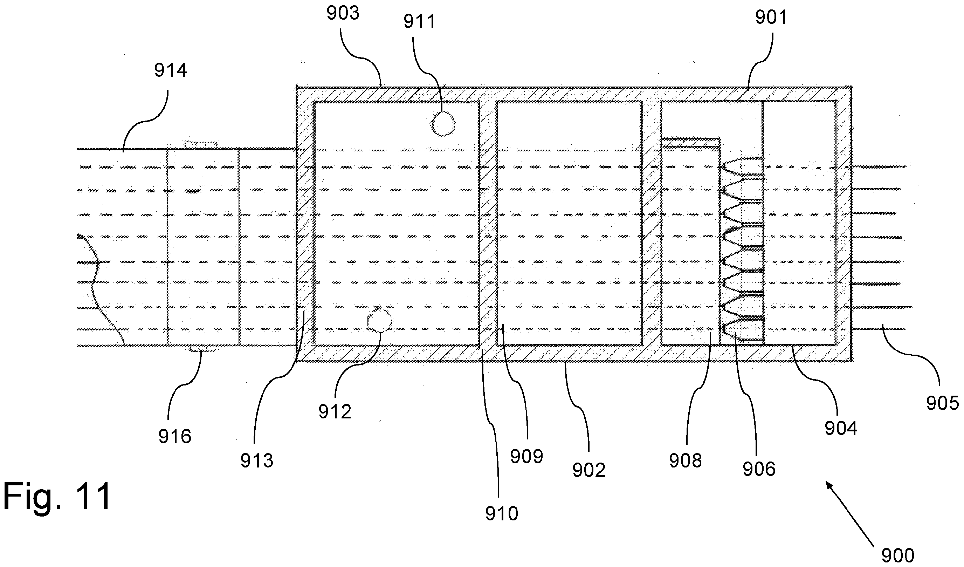

The present disclosure covers a system and a method for coating a plurality of metal wires with polymer to produce a reinforced flexible structure of metal wires encompassed by or embedded within polymer. Such a reinforced flexible structure may be used as a reinforced flexible seal in a sealing assembly according to embodiments of the present disclosure. This is further illustrated in Figs. 9 to 11, for which Fig. 9 is a schematic cut away perspective view of a system 900 for producing a reinforced flexible structure 914 according to a first example embodiment, Fig. 10 is a schematic cut away side view of the system 900 of Fig. 9, and Fig. 11 is a schematic cut away top view of the system 900 of Fig. 9.

The system 900 comprises an extrusion chamber 901, a die 902 and a cooling chamber 903. The system 900 further comprises a polymer supply (not shown in the Figures) for delivering molten polymer at a pressure to the extrusion chamber 901, a wire supply (not shown in the Figures) for delivering a plurality of metal wires 905 to the extrusion chamber 901, and one or more extraction units 915, 916 located downstream of the cooling chamber 903 for receiving and extracting a cooled and shaped structure 914 from the cooling chamber 903.

The molten polymer may be a material comprising a natural polymer material such as rubber and/or a synthetic polymer material such as synthetic rubber or a thermoplastic material or a polyvinyl chloride, PVC, material. It is also within an embodiment that the polymer containing material used for the extrusion process is a thermoplastic elastomer, TPE, type material, such as a thermoplastic vulcanizates, TPV, type material. In an embodiment the polymer containing material is Santoprene™, such as Santoprene 201-73.

The die 902 is formed for shaping the structure 914 of polymer and metal wires 905. The die 902 has a die inlet 908 with an opening and a die outlet 909 with an opening opposite the die inlet opening, and the die 902 connects the extrusion chamber 901 and the cooling chamber 903.

The extrusion chamber 901 comprises a wire receiving and feeding part 904 with a plurality of parallel arranged wire feeding pipes 906 having orifices being arranged with a substantially equal spacing for output of the metal wires 905, an inlet 907 for receiving the pressurised molten polymer, and an output part holding the die inlet 908 with the die inlet opening facing the orifices of the wire feeding pipes 906. In order to better illustrate the interior of the extrusion chamber 901, there is not shown any received molten polymer within the extrusion chamber 901. The wire feeding pipes 906 are arranged with the orifices substantially along a centre line of the die inlet opening 908, whereby the received metal wires 905 and the received molten polymer can be fed from the extrusion chamber 901 to the die 902 via the die inlet 908 opening to form a structure with the molten polymer encompassing the metal wires 915.

The die outlet 913 opening is shaped to give a desired form to the received structure of molten polymer and metal wires 905. In an embodiment the die outlet 913 may have a substantially rectangular cross-sectional or elliptical shape to give a flattened shape to the received structure of molten polymer and metal wires 905. The cooling chamber 903 has an inlet part 910 holding the die outlet 909 for receiving the shaped structure of polymer and metal wires 905, and an outlet part 913 facing the inlet part 910 and arranged for output of the cooled shaped structure 914 of polymer and metal wires 905.

When the structure with molten polymer and metal wires 905 passes through the die 902 from the die inlet 908 to the die outlet 909, the structure is cooled by the ambient air of the die 902. A further cooling is provided in the cooling chamber 903, which also holds a cooling medium inlet 911 for receiving a cooling medium for cooling the received shaped structure of polymer and metal wires 905, and a cooling medium outlet 912 for output of the cooling medium. The cooling chamber 903 further holds one or more supports 917 for supporting the shaped structure of polymer and metal wires when being transferred from the inlet part 910 to the outlet part 913 of the cooling chamber 903 while being cooled by the cooling medium. The extraction units 915, 916, which are located downstream the cooling chamber 903 and arranged for receiving and extracting the cooled and shaped structure 914 from the outlet part 913 of the cooling chamber 903, may in a preferred embodiment be a pair of extraction rolls 915, 916, whereby the cooled and shaped structure can be extracted by a rotational movement of the rolls 915, 916.

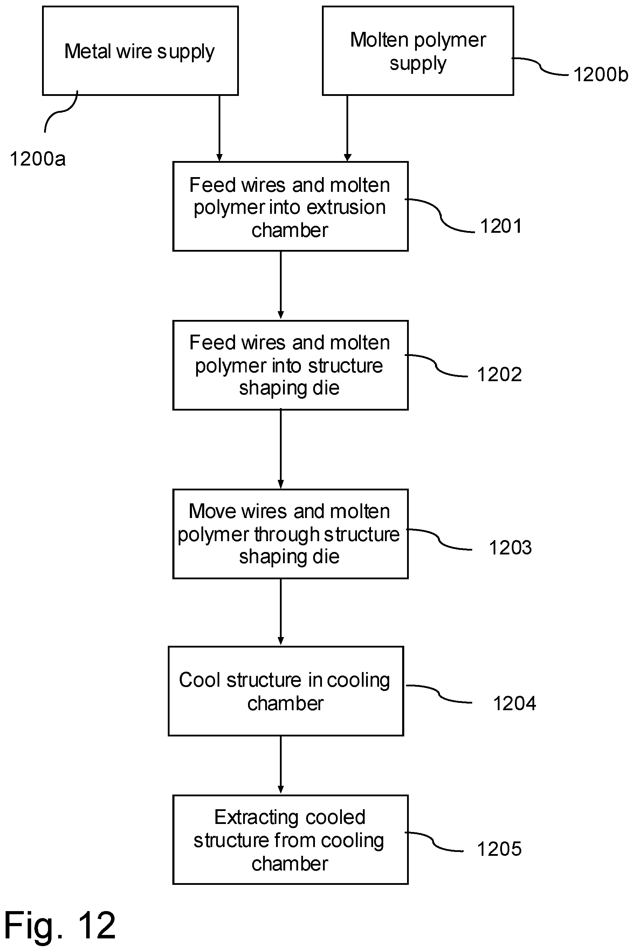

An embodiment of a first method for producing a reinforced flexible structure by coating a plurality of metal wires with polymer is illustrated in the flow chart of Fig. 12. In the following, references is made to both Figs. 9 and 12. The method starts by providing a supply of metal wires 905, step 1200a, and providing a supply of molten polymer, step 1200b. The method then comprises a step 1201 of feeding a plurality of metal wires 905 into an extrusion chamber 901, with each of said wires running in parallel to each other with a substantial equal spacing, and at the same time feeding the molten polymer at a pressure to the extrusion chamber 901.

This is followed by step 1202 of feeding the molten polymer and the metal wires 905 from the extrusion chamber 901 into a structure shaping die 902, where the feeding of molten polymer and metal wires 905 into the die 902 is controlled so as to maintain the wires 905 running in parallel to each other with a substantial equal spacing and in a centred position within the die 902, whereby the molten polymer encompasses the metal wires 905 within the die. Next, step 1203, the molten polymer encompassing the metal wires 905 is passed through the die 902 to shape the molten polymer and metal wires 905 into a flattened structure. Next, step 1204, the obtained flattened structure, which has been passed through the die 902, is cooled to obtain a cooled reinforced flexible structure 924 of metal wires 905 encompassed by polymer. The cooling may be performed in a cooling chamber 903. Finally, step 1205, the cooled flattened structure 914 is extracted from the cooling chamber 903 by one or more extraction units, such as a pair of extraction rolls 915, 916.

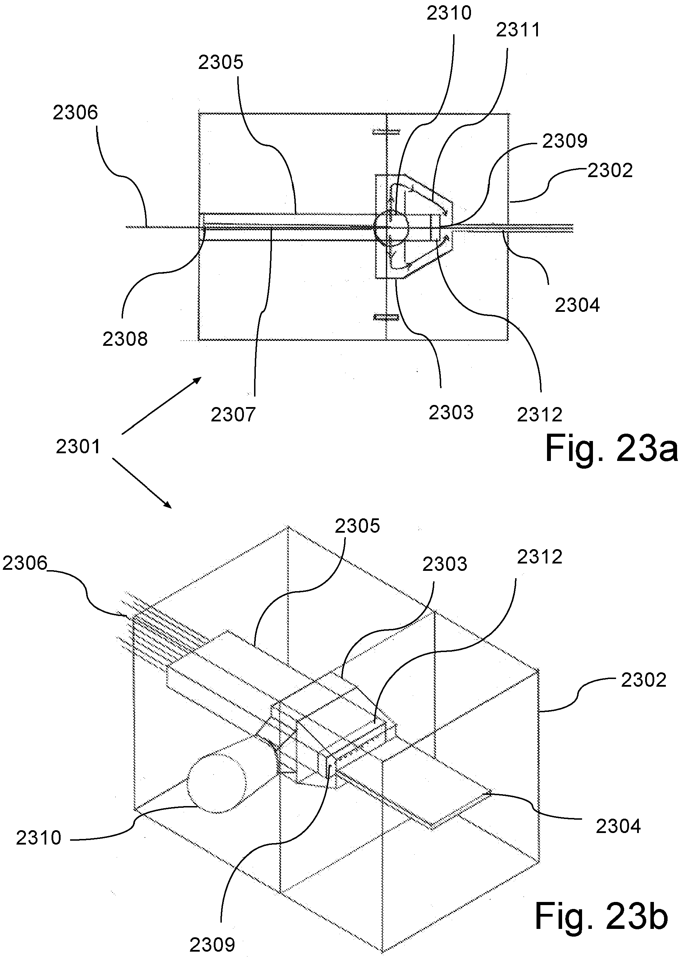

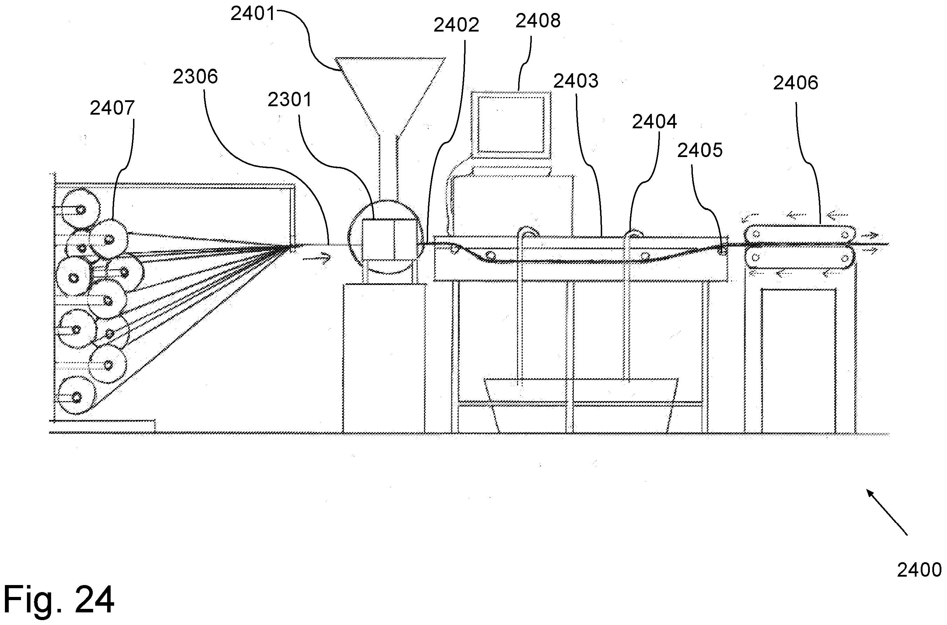

Figs. 23a, b and 24 illustrate a system 2400 according to a second example embodiment for coating a plurality of metal wires with polymer to produce a reinforced flexible structure of metal wires encompassed by polymer, which reinforced flexible structure may be used as a reinforced flexible seal in a sealing assembly according to embodiments of the present disclosure. Figs. 23a and 23b are schematic cut away perspective views of an extrusion part 2301, which can be used in the system 2400, and Fig. 24 is a schematic view of the system 2400.

The extrusion part 2301, which is shown in Figs. 23a and 23b, has an extrusion die 2302 for shaping the structure of polymer and metal wires, where the extrusion die 2301 has a die inlet part 2303 with an opening and a die outlet part 2304 with an opening opposite the die inlet opening. The extrusion part 2301 also holds a wire supply part 2305 for feeding a plurality of metal wires 2306 to the extrusion die 2302. The wire supply part 2305 comprises a plurality of substantially parallel wire feeding guides 2307, where each wire feeding guide 2307 is dimensioned for guiding a single wire and has a wire input opening 2308 and a wire output opening 2309. The wire feeding guides 2307 are arranged or positioned with the wire output openings 2308 substantially in line and centred at the die inlet part 2303 for output of the metal wires 2306 into the extrusion die 2302.

The extrusion part 2301 further comprises one or more inlets 2310 for receiving a pressurised molten polymer containing material, and the extrusion part 2301 is configured to feed the pressurised molten polymer containing material into the die inlet part 2303, whereby the received metal wires 2306 and the received molten polymer containing material can be fed through the extrusion die 2302 from the die inlet part 2303 to the die outlet part 2304 to form a structure with the molten polymer containing material encompassing the metal wires 2306. The die outlet opening is shaped to give a desired or predetermined shape or form to the resulting structure of molten polymer containing material and metal wires 2306.

The wire supply part 2305 comprises a wire guide positioning part 2312, where the wire guide positioning part 2312 holds the wire output openings 2309. The wire guide positioning part 2312 is arranged or positioned relative to the die inlet part 2303 with the wire output openings 2309 positioned substantially in line and centred at the die inlet part 2303. The wire guide positioning part 2312 is received within the die inlet part 2303 with a polymer spacing provided between inner wall parts of the die inlet part 2303 and outer wall parts of the wire guide positioning part 2312. The extrusion part is thus configured for supplying the molten polymer containing material via the polymer inlet 2310 into the die inlet part 2303 and via the polymer spacing round the wire positioning part 2312 to the wire output openings 2309 and through the die outlet part 2304 as indicated by arrows 2311.

In an alternative embodiment, which is not shown in Figs. 23a and 23b, the wire guide positioning part 2312 may have a width and a height, where the width of the wire guide positioning part 2312 decreases towards an output end holding the wire output openings 2309.

The die inlet opening may have an area being larger the area of the die outlet opening, and for the embodiment of an extrusion part 2301 shown in Figs. 23a and 23b the die inlet part 2303 has a width and a height, where the height of the die inlet part 2303 decreases inwards from the die inlet opening. The die outlet opening may have a substantially rectangular cross-sectional or elliptical shape to give a flattened shape to the received structure of molten polymer and metal wire, and the die inlet opening may have a substantial rectangular cross-sectional or elliptical shape. It is preferred that die outlet opening has a substantially rectangular cross-sectional shape. It is also preferred that the die inlet opening has a substantial rectangular cross-sectional shape.

The area of the wire input openings 2308 of the wire feeding guides 2307 may be larger than the area of the wire output openings 2309, and the internal cross-sectional area of the wire feeding guides 2307 may thus decrease from the wire input openings 2308 to the wire output openings 2309. In order to securely guide the wires 2306, the wire feeding guides 2307 should be formed as wire feeding pipes. The wire feeding guides or pipes 2307 may have an inner diameter or opening configured to receive metal wires or strips or stainless steel wires with a thickness or diameter of no less than 0,4 mm, such as no less than 0,6 mm, such as no less than 0,8 mm, such as no less than 0,9 mm, such as a diameter of 0,9 mm or 1 mm or 1,1 mm.

It is preferred that each wire feeding guide or pipe 2307 has an inner guiding wall, and that the wire feeding guides or pipes 2307 have a length which is larger than or equal to the shortest distance between the inner guiding walls of two neighbouring wire feeding guides 2307. The length of the wire feeding guides or pipes 2307 may be at least two times, such as at least three times, or such as at least four times larger than the distance between the inner walls of two neighbouring wire feeding guides or pipes 2307. It is preferred that the wire output opening of each or at least part of the wire feeding guides or pipes 2307 has a width or diameter, which is smaller than the shortest distance between the inner guiding walls of two neighbouring wire feeding guides or pipes 2307. The shortest distance between the inner guiding walls of two neighbouring wire feeding guides or pipes may be at least one and half times, such as at least two times, such as at least three times larger than the width or diameter of the wire output opening 2309.

In order to obtain a flexible seal with metal wires arranged with an equal spacing, at least part or all of the plurality of substantially parallel wire feeding guides or pipes 2307 are arranged with a substantial equal spacing. Here, the substantial equal spacing may be equal to or no larger than 20 mm, such as equal to or no larger than 19 mm, such as equal to or no larger than 18 mm, such as equal to or no larger than 17 mm, such as equal to or no larger than 15 mm, such as equal to or no larger than 12 mm, such as equal to or no larger than 10 mm, such as equal to or no larger than 9 mm, such as equal to or no larger than 8 mm, such as no equal to or larger than 7 mm, such as equal to or no larger than 6 mm, such as equal to or no larger than 5 mm, such as equal to or no larger than 4 mm, such as equal to or no larger than 3 mm, or such as equal to or no larger than 2 mm.

As illustrated in Fig. 24c, the system 2400 comprises the extrusion part 2301 described above, and a polymer supply 2401 for delivering a molten polymer containing material at a pressure to the extrusion part 2301. The system 2400 further comprises a number of wire rolls 2407 holding the metal wires 2603, which are received by the extrusion part 2301 via the wire supply part 2305. The resulting structure 2402 of molten polymer containing material and metal wires being output from the die output opening of extrusion die 2302 is fed into a cooling station 2403, which as shown in Fig. 24 may be an open cask or container holding a cooling medium. The cooling station 2403 holds cooling medium inlets and outlets 2404 for input and output of a cooling medium, such as water, for cooling the received shaped structure 2402 of polymer and metal wires 2306. The cooling station 2403 holds one or more supports 2405 for supporting the shaped structure 2402 of polymer and metal wires when being transferred from through the cooling station 2403 while being cooled by the cooling medium. The system 2400 further comprises an extraction unit 2406, which is positioned downstream the cooling station and arranged for receiving and extracting the cooled and shaped structure from an outlet part of the cooling station 2403. The extraction unit 2406 may hold a pair of extraction rolls, which are arranged for receiving the cooled and shaped structure of the polymer containing material and metal wires between the rolls and for extracting the cooled and shaped structure by a rotational movement of the rolls. The system 2400 may also comprise a computer control unit 2408 for controlling the extrusion process performed by use of the system 2400.

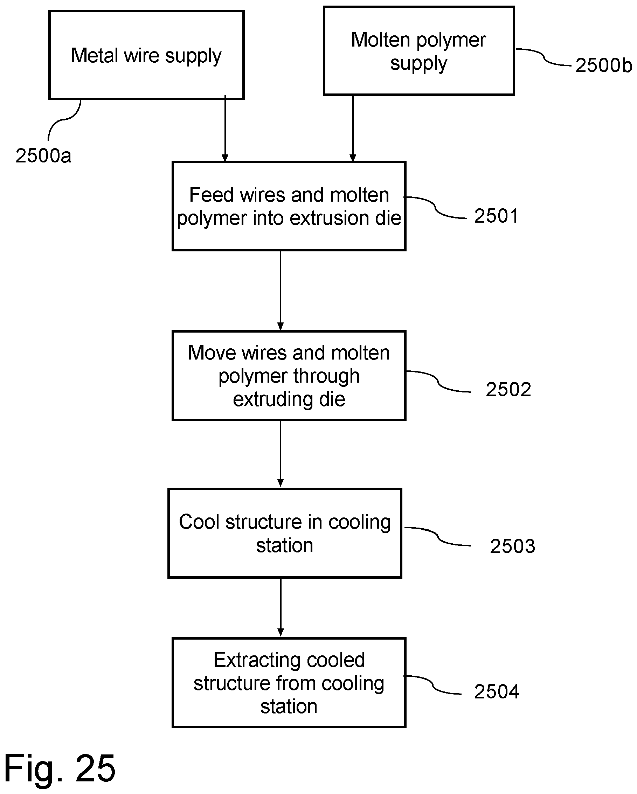

An embodiment of a method for producing a reinforced flexible structure by coating a plurality of metal wires with polymer is illustrated in the flow chart of Fig. 25. In the following, references is made to both Figs. 23, 24 and 25. The method starts by providing a supply of metal wires 2306, step 2500a, and providing a supply of molten polymer, step 2500b. The method then comprises a step 2501 of feeding a plurality of metal wires 2306 into an extrusion die 2302, with each of said wires running in parallel to each with a substantial equal spacing and in a centred position other within an inlet part 2303 of the extrusion die 2302, and at the same time feeding the molten polymer at a pressure to the extrusion die 2302. It is within an embodiment that the metal wires 2306 are pre-heated before being fed into the extrusion die 2302. The metal wires 2306 may be pre-heated to a temperature in the range of 175 to 225 °C, such as about 180 °C, or such as about 200 °C.

This is followed by step 2502, wherein the molten polymer encompassing the metal wires 2306 is passed through the die 2302 to shape the molten polymer and metal wires into a flattened structure 2402. Next, step 2503, the obtained flattened structure 2402, which has been passed through the die 2302, is cooled to obtain a cooled reinforced flexible structure of metal wires 2306 encompassed by polymer. The cooling may be performed in a cooling station 2404. Finally, step 2504, the cooled flattened structure is extracted from the cooling station 2404 by one or more extraction units 2406, such as a pair of extraction rolls 2406.

For the above described systems and methods of Figs. 9 to 12 and Figs. 23 to 25, and the insert molding process, it is preferred that the metal wires may be metal wires or narrow metal strips 905, 2306 which are made of steel or stainless steel or spring steel. The wires or thin metal strips may have a thickness or diameter equal to or no less than 0,4 mm, equal to or no less than 0,6 mm, equal to or no less than 0,7 mm, equal to or no less than 0,8 mm, equal to or no less than 0,9 mm, equal to or no less than 1 mm, equal to or no less than 1,1 mm, equal to or no less than 1,2 mm, equal to or no less than 1,2 mm, equal to or no less than 1,3 mm, equal to or no less than 1,4 mm, equal to or no less than 1,5 mm, equal to or no less than 1,6 mm, equal to or no less than 1,7 mm, equal to or no less than 1,8 mm, equal to or no less than 1,9 mm, equal to or no less than 2,0 mm, equal to or no less than 2,1 mm, equal to or no less than 2,2 mm, equal to or no less than 2,4 mm, equal to or no less than 2,7 mm, or equal to or no less than 3 mm.

When the wires 905, 2306 are formed as metal strips, the metal strips may have a width equal to or no less than 1 mm, equal to or no less than 1,5 mm, equal to or no less than 2 mm, or equal to or no less than 2,5 mm.

The polymer supply 2401 may be configured for delivering the molten polymer to the extrusion chamber 901 or extrusion part 2301 at a temperature in the range of 175 to 225 °C, such as about 180 °C. The molten polymer may be fed to the extrusion chamber 901 or extrusion part 2301 at a pressure in the range of 20 to 50 bar, such as about 30 bar. The cooling is performed in a cooling chamber 903 or cooling station 2404 by a cooling medium, such as cold water, and the flattened structure 914 or 2402 is cooled to a temperature in the range of 30 to 45 °C, such as about 40 °C.

The molten polymer may be polyvinyl chloride, PVC, or the polymer containing material used for the extrusion process may be a thermoplastic elastomer, TPE, type material, such as a thermoplastic vulcanizates, TPV, type material. In an embodiment the polymer containing material is Santoprene™, such as Santoprene 201-73. The flexible structure 914 being the result of the extrusion processes may have a thickness in the range of 2 to 30 mm, such as in the range of 2 to 20 mm, such as in the range of 2 to 10 mm, such as in the range of 2 to 5 mm, such as in the range of 2,5 to 4 mm, such as about 3 mm.

The wires 905 or 2306 may be arranged at a distance to each other which is equal to or no larger than 20 mm, such as equal to or no larger than 19 mm, such as equal to or no larger than 18 mm, such as equal to or no larger than 17 mm, such as equal to or no larger than 15 mm, such as equal to or no larger than 12 mm, such as equal to or no larger than 10 mm, such as equal to or no larger than 9 mm, such as equal to or no larger than 8 mm, such as no equal to or larger than 7 mm, such as equal to or no larger than 6 mm, such as equal to or no larger than 5 mm, such as equal to or no larger than 4 mm, such as equal to or no larger than 3 mm, or such as equal to or no larger than 2 mm.

The resulting flexible structure 914 or 2402 may have different widths, such as up to 120 cm, such as up to 100 cm, such as up to 80 cm, such as up to 60 cm, such as up to 50 cm, such as up to 40 cm, such as up to 30 cm, or such as up to 20 cm, but when used for sealing, the structure 924 or 2402 may have a width in the range of 1,5 to 30 cm, such as in the range of 2 to 20 cm, such as in the range of 2 to 15 cm , such as in the range of 4 to 12 cm, such as in the range of 6 to 10 cm, such as in the range of 7 to 9 cm, such as about 8 cm.

### Rat resistance test of reinforced flexible seals

Three reinforced flexible seals according to the disclosure were tested for their ability to resist persistent rat attacks. The test was designed and carried out by the independent Danish test institute Danish Technological Institute.

The reinforced flexible seals were black, 3 mm thick and 75 mm broad. They were made of SantopreneTM 201-73 (a TPV with a Shore A hardness score of 78) and solid single stranded steel wires with a diameter of 1 mm. These were the only components. There were 10 parallel steel wires embedded in each flexible seal. The seals had been produced by simultaneous extrusion of the TPV Santoprene™ 201-73 and the steel wires. The distance between each steel wire and the neighboring steel wire(s) was 5 mm. There was 3 mm from the lowermost edge to the nearest steel wire. From the upper edge there was 17 mm to the nearest steel wire.

The three flexible seals were tested on a double swing door of steel with each door leaf mounted on two hinges, see the sealed door assembly 2200 illustrated in Fig. 22c. Each of the door leaves was 85 cm broad. The astragal gap i.e. the distance between the leading edges of the two doors leaves when closed was 8 mm. Under the double door there was mounted a broad steel strip. The threshold gap i.e. the distance between the bottom edges of the two door leaves when closed and the underlying steel strip was 45 mm.

The two rats used in the test were male rats of average size and in good health. Danish Technological Institute provided the rats.

The bottom of the quadrangular test box, where the double door was mounted, and the test was performed, was 1.8 meter by 1.5 meter. The test box was 0.6 meter high. On top of the box there was a plywood plate with Plexiglas windows, so the rats could be observed without taking off the top plate. Attached to one end of the test box there was a small cage where the two rats could sleep. Attached to the opposite end of the box there was another small cage, where their food was served during the first week of the two-week test period (the feeding cage). The double doorwas mounted in the middle of the test box and divided it into two halves of equal size. The double door was closed during the entire two week test period.

The three door seals were mounted on the two door leaves by means of three mounting strips of stainless steel. The steel strips were 2 mm thick and 38 mm broad. The steel strips were fastened to the door leaves by rivets. The distance between a rivet and its neighboring rivet(s) mounted through the same steel strip was around 200 mm.

The two threshold gaps were covered by two door seals mounted horizontally on the bottom of the two door leaves. The astragal gap was covered by the third door seal, which was mounted vertically on the active door leaf (i.e. the door leaf to be swung open first when opening the double door). The two horizontally mounted door seals partly overlapped with each other, where they met in the middle of the double door. The horizontal overlap was 7 mm.

The length of the three door seals was as follows: A) The door seal horizontally mounted on the active door leaf: 860 mm. B) The door seal vertically mounted on the active door leaf: 500 mm. C) The door seal horizontally mounted on the passive door leaf: 855 mm.

The three steel strips were mounted on the door leaves in line with the edges of the door leaves so no part of the steel strips covered any part of the astragal gap or the threshold gaps - except the end pieces of the horizontally mounted steel strips, which both covered 3 mm of the lowermost part of the astragal gap (leaving a 2 mm gap between the 2 steel strips). With the said exception the astragal gap and the threshold gaps were only covered by the door seals.

The test was performed over a 14 days period in May 2017. In the beginning of the test period none of the door seals were mounted. The rats could, therefore, freely pass under the door leaves through the 45 mm threshold gaps.

During the first seven days, the rats were fed generously in the feeding cage. On day eight, the three door seals were mounted. They blocked the rats' access to the half of the test box, where the rats were used to be fed (the feeding half).

The next seven days, the two rats were fed less generously, and they were fed in the half of the test box, where they slept (the sleeping half). Even though the diet was reduced, it was sufficient to keep them in good health and alert. The rats' favorite food such as an open sandwich with eggs and shrimps was placed on the bottom of the feeding half of the test box and a fan was placed behind the food in order to blow the smell of the food through chinks in the double door to the rats in the sleeping half.

The purpose of changing the diet and placing favorite food in the feeding half was to make them interested in overcoming the introduced obstacle between the two halves of the test box - i.e. to make them interested in attacking the door seals and entering the feeding half.

The two rats did - as they were supposed to - try to gnaw their way through the door seals. The rats succeeded in gnawing off several centimeters of the Santoprene™, but the partly bare steel wires maintained their ability to repel the attacks even though they had been laid open. The rats also attempted to push the horizontally mounted door seals up in order to pass under them, but that attempt was also unsuccessful. The door seals passed the test as the rats did not manage to enter the feeding half with their favorite foods.

A main advantage of using reinforced flexible seals 2201a, 2201b, see Fig. 22c, of the present disclosure as door seals is that the seals are highly flexible in the vertical direction, and still the rats are not able to push up the lower part of the seals in order to pass under the seals. This is due to the stiffness provided by the thickness of the wires/strips and the arrangement of the metal wires/strips rather close to each other. This also prevents the rats from entering through the seal, even when the rats have gnaw away the outer material encompassing or enclosing the metal wires/stripes. It is also noted that the rats were not able to bend the bare metal wires/strips of the first extending part 2011a of the first seal 2201a, which also prevented the rats from entering through the seal 2201a.

Another advantage of using reinforced flexible seals of the present disclosure as door seals is that even though the seals are highly flexible in the vertical direction, the seals still are very good for retaining water, such as rainwater, sewage water, orwater from flooding. The flexible seals or seal assemblies of the present disclosure may also help in preventing temperature changes across the sealed space, and help in preventing entrance of insects or other animals than rats.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality.

## Claims

1. A sealed wall, fence, door, port or window assembly (300, 500) for sealing a gap or space between an edge of a wall, fence, door, port or window and a surface adjacent to the wall, fence, door, port or window, said assembly comprising
a wall, fence, door (307), port or window (507) with an edge;
a reinforced flexible seal (101, 301, 501, 1301, 2601, 2701a,b,c, 3101) having a width and a length and comprising:
a flexible outer material (102a,b, 302, 1302a,b, 2602a,b, 3102); and
a plurality of metal wires (103, 303a,b, 1303, 2603, 2703a,b,c, 3103) embedded in at least part of the flexible outer material (102,a,b, 302, 1302a,b, 2602a,b, 2702a,b,c, 3102); wherein
the reinforced flexible seal (101, 301, 501, 1301, 2601, 2701a,b,c, 3101) is connected to the edge of the wall, fence, door (307), port or window (507) with the reinforced flexible seal having a width for forming a seal with metal wires (103, 303a,b, 1303, 2603, 2703a,b,c, 3103) extending between said edge and the adjacent surface; **characterised in that**
each of the wires (103, 303a,b, 1303, 2603, 2703a,b,c, 3103) are running substantially in parallel to each other and substantially in a longitudinal direction of the reinforced flexible seal (101, 301, 501, 1301, 2601, 2701a,b,c, 3101) with at least part of said metal wires (103, 303a,b, 1303, 2603, 2703a,b,c, 3103) arranged at a distance to each other, and with the metal wires (103, 303a,b, 1303, 2603, 2703a,b,c, 3103) extending substantially parallel to the longitudinal direction of the wall, fence, door, port or window edge.

2. A sealed assembly (300, 500) according to claim 1, wherein the flexible outer material (102a,b, 302, 1302a,b, 2602a,b, 3102) has a flattened form with a substantially constant thickness.

3. A sealed assembly (300, 500) according to claim 1 or 2, wherein the reinforced flexible seal (101, 301, 501, 1301, 2601, 2701a,b,c, 3101) is connected to a lower edge of the wall, fence, door (307), port or window (507).

4. A sealed assembly (300, 500) according to any one of the claims 1 to 3, wherein the successively arranged metal wires (103, 303a,b, 1303, 2603, 2703a,b,c, 3103) are arranged with equal spacing.

5. A sealed assembly (300, 500) according to claim 4, wherein the reinforced flexible seal (101, 301, 501, 1301, 2601, 2701a,b,c, 3101) has an outer edge, and the spacing between said outer edge and an outermost positioned metal wire is smaller than said equal spacing.

6. A sealed assembly (300, 500) according to any one of the claims 1 to 5, wherein the flexible outer material (102a,b, 302, 1302a,b, 2602a,b, 3102) comprises a thermoplastic vulcanizates, TPV, type material.

7. A sealed assembly (300, 500) according to any one of the claims 1 to 6, wherein the flexible outer material (102a,b, 302, 1302a,b, 2602a,b, 3102) has a thickness in the range of 2 to 30 mm, such as in the range of 2 to 20 mm, such as in the range of 2 to 10 mm, such as in the range of 2 to 5 mm, such as in the range of 2,5 to 4 mm, such as about 3 mm.

8. A sealed assembly (300, 500) according to any one of the claims 1 to 7, wherein at least part of or all of said metal wires (103, 303a,b, 1303, 2603, 2703a,b,c, 3103) are arranged at a distance to each other being no larger than 8 mm, such as no larger than 7 mm, such as no larger than 6 mm, such as no larger than 5 mm, or such as no larger than 4 mm.

9. A sealed assembly (300, 500) according to any one of the claims 1 to 8, wherein the metal wires (103, 303a,b, 1303, 2603, 2703a,b,c, 3103) have a thickness or diameter equal to or no less than 0,8 mm, such as equal to or no less than 0,9 mm, such as equal to or no less than 1 mm, or such as equal to or no less than 1,1 mm.

10. A sealed assembly (300, 500) according to any one of the claims 3 to 9, wherein the reinforced flexible seal (2701a,b,c) has an upper part and a bottom part, and wherein
a brush or fibre material, such as a fibre or brush strip (2714a,b,c), is attached to or integrated into the bottom part of the reinforced flexible seal (2701a,b,c) and extends below said reinforced flexible seal.

## Patentansprüche

1. Abgedichtete Wand-, Einfriedungs-, Tür-, Zugangs- oder Fensteranordnung (300, 500) zum Abdichten eines Spalts oder Zwischenraums zwischen einem Rand einer Wand, eines Zauns, einer Einfriedung, einer Tür, eines Zugangs oder Fensters und einer Oberfläche, die an die Wand, die Einfriedung, die Tür, den Zugang oder die Fensteranordnung grenzt, wobei die Anordnung Folgendes umfasst:
eine Wand, eine Einfriedung, eine Tür (307), einen Zugang oder ein Fenster (507) mit einem Rand,
eine verstärkte flexible Dichtung (101, 301, 501, 1301, 2601, 2701a,b,c, 3101) mit einer Breite und einer Länge und Folgendes umfassend:
ein flexibles äußeres Material (102a,b, 302, 1302a,b, 2602a,b, 3102); und
mehrere Metalldrähte (103, 303a,b, 1303, 2603, 2703a,b,c, 3103), die in mindestens einen Teil des flexiblen äußeren Materials (102,a,b, 302, 1302a,b, 2602a,b, 2702a,b,c, 3102) eingebettet sind; wobei
die verstärkte flexible Dichtung (101, 301, 501, 1301, 2601, 2701a,b,c, 3101) mit dem Rand der Wand, der Einfriedung, der Tür (307), des Zugangs oder des Fensters (507) verbunden ist, wobei die verstärkte flexible Dichtung eine Breite zum Bilden einer Dichtung mit Metalldrähten (103, 303a,b, 1303, 2603, 2703a,b,c, 3103) aufweist, die sich zwischen dem Rand und der angrenzenden Oberfläche erstreckt; **dadurch gekennzeichnet, dass**
jeder der Drähte (103, 303a,b, 1303, 2603, 2703a,b,c, 3103) jeweils im Wesentlichen parallel zueinander und im Wesentlichen in Längsrichtung der verstärkten flexiblen Dichtung (101, 301, 501, 1301, 2601, 2701a, b, c, 3101) verlaufen, wobei mindestens ein Teil der Metalldrähte (103, 303a,b, 1303, 2603, 2703a,b,c, 3103) in einem Abstand zueinander angeordnet ist und wobei sich die Metalldrähte (103, 303a,b, 1303, 2603, 2703a,b,c, 3103) im Wesentlichen parallel zu der Längsrichtung des Wand-, Einfriedungs-, Tür-, Zugangs- oder Fensterrandes erstrecken.

2. Abgedichtete Anordnung (300, 500) nach Anspruch 1, wobei das flexible äußere Material (102a,b, 302, 1302a,b, 2602a,b, 3102) eine abgeflachte Form mit einer im Wesentlichen konstanten Dicke aufweist.

3. Abgedichtete Anordnung (300, 500) nach Anspruch 1 oder 2, wobei die verstärkte flexible Dichtung (101, 301, 501, 1301, 2601, 2701a,b,c, 3101) mit einem unteren Rand der Wand, der Einfriedung, der Tür (307), des Zugangs oder des Fensters (507) verbunden ist.

4. Abgedichtete Anordnung (300, 500) nach einem der Ansprüche 1 bis 3, wobei die aufeinanderfolgend angeordneten Metalldrähte (103, 303a,b, 1303, 2603, 2703a,b,c, 3103) mit gleichem Abstand angeordnet sind.

5. Abgedichtete Anordnung (300, 500) nach Anspruch 4, wobei die verstärkte flexible Dichtung (101, 301, 501, 1301, 2601, 2701a,b,c, 3101) einen Außenrand aufweist und der Abstand zwischen dem Außenrand und einem am weitesten außen positionierten Metalldraht kleiner als der gleiche Abstand ist.

6. Abgedichtete Anordnung (300, 500) nach einem der Ansprüche 1 bis 5, wobei das flexible äußere Material (102a,b, 302, 1302a,b, 2602a,b, 3102) ein Material vom Typ eines thermoplastischen Vulkanisats, TPV, umfasst.

7. Abgedichtete Anordnung (300, 500) nach einem der Ansprüche 1 bis 6, wobei das flexible äußere Material (102a,b, 302, 1302a,b, 2602a,b, 3102) eine Dicke im Bereich von 2 bis 30 mm aufweist, wie beispielsweise im Bereich von 2 bis 20 mm, wie beispielsweise im Bereich von 2 bis 10 mm, wie beispielsweise im Bereich von 2 bis 5 mm, wie beispielsweise im Bereich von 2,5 bis 4 mm, wie beispielsweise etwa 3 mm.

8. Abgedichtete Anordnung (300, 500) nach einem der Ansprüche 1 bis 7, wobei mindestens ein Teil oder alle der Metalldrähte (103, 303a,b, 1303, 2603, 2703a,b,c, 3103) in einem Abstand zueinander angeordnet sind, der nicht größer als 8 mm, beispielsweise nicht größer als 7 mm, beispielsweise nicht größer als 6 mm, beispielsweise nicht größer als 5 mm oder beispielsweise nicht größer als 4 mm ist.

9. Abgedichtete Anordnung (300, 500) nach einem der Ansprüche 1 bis 8, wobei die Metalldrähte (103, 303a,b, 1303, 2603, 2703a,b,c, 3103) eine Dicke oder einen Durchmesser gleich oder nicht kleiner als 0,8 mm aufweisen, wie beispielsweise gleich oder nicht kleiner als 0,9 mm, wie beispielsweise gleich oder nicht kleiner als 1 mm oder wie beispielsweise gleich oder nicht kleiner als 1,1 mm.

10. Abgedichtete Anordnung (300, 500) nach einem der Ansprüche 3 bis 9, wobei die verstärkte flexible Dichtung (2701a,b,c) einen oberen Teil und einen unteren Teil aufweist und wobei
ein Bürsten- oder Fasermaterial, wie beispielsweise eine Faser- oder Bürstenleiste (2714a,b,c), an dem unteren Teil der verstärkten flexiblen Dichtung (2701a,b,c) angebracht oder in diesen integriert ist und sich unter der verstärkten flexiblen Dichtung erstreckt.

## Revendications

1. Assemblage scellé de mur, clôture, porte, port ou fenêtre (300, 500) pour le scellement d'un intervalle ou d'un espace entre un bord d'un mur, d'une clôture, d'une porte, d'un port ou d'une fenêtre et une surface adjacente au mur, à la clôture, à la porte au port ou à la fenêtre, ledit ensemble comprenant
un mur, une clôture, une porte (307), un port ou une fenêtre (507) doté d'un bord ;
un joint flexible renforcé (101, 301, 501, 1301, 2601, 2701a,b,c, 3101) ayant une largeur et une longueur et comprenant :
un matériau extérieur flexible (102a,b, 302, 1302a,b, 2602a,b, 3102) ; et
une pluralité de fils métalliques (103, 303a,b, 1303, 2603, 2703a,b,c, 3103) encastrés dans au moins une partie du matériau extérieur flexible (102a,b, 302, 1302a,b, 2602a,b, 2702a,b,c, 3102) ; dans lequel
le joint flexible renforcé (101, 301, 501, 1301, 2601, 2701a,b,c, 3101) est connecté au bord du mur, de la clôture, de la porte (307), du port ou de la fenêtre (507) par le joint flexible renforcé ayant une largeur pour former un joint comportant des fils métalliques (103, 303a,b, 1303, 2603, 2703a,b,c, 3103) s'étendant entre ledit bord et la surface adjacente ;
**caractérisé en ce que**
chacun des fils (103, 303a,b, 1303, 2603, 2703a,b,c, 3103) passe substantiellement parallèlement aux autres et substantiellement dans un sens longitudinal du joint flexible renforcé (101, 301, 501, 1301, 2601, 2701a,b,c, 3101) avec au moins une partie desdits fils métalliques (103, 303a,b, 1303, 2603, 2703a,b,c, 3103) disposés à distance les uns des autres, et les fils métalliques (103, 303a,b, 1303, 2603, 2703a,b,c, 3103) s'étendant substantiellement parallèlement au sens longitudinal du bord du mur, de la clôture, de la porte, du port ou de la fenêtre.

2. Assemblage scellé (300, 500) selon la revendication 1, dans lequel le matériau extérieur flexible (102a,b, 302, 1302a,b, 2602a,b, 3102) a une forme aplatie dotée d'une épaisseur substantiellement constante.

3. Assemblage scellé (300, 500) selon la revendication 1 ou 2, dans lequel le joint flexible renforcé (101, 301, 501, 1301, 2601, 2701a,b,c, 3101) est connecté à un bord inférieur du mur, de la clôture, de la porte (307), du port ou de la fenêtre (507).

4. Assemblage scellé (300, 500) selon l'une quelconque des revendications 1 à 3, dans lequel les fils métalliques disposés successivement (103, 303a,b, 1303, 2603, 2703a,b,c, 3103) sont disposés avec un espacement égal.

5. Assemblage scellé (300, 500) selon la revendication 4, dans lequel le joint flexible renforcé (101, 301, 501, 1301, 2601, 2701a,b,c, 3101) comporte un bord extérieur, et l'espacement entre ledit bord extérieur et un fil métallique positionné le plus à l'extérieur est inférieur audit espacement égal.

6. Assemblage scellé (300, 500) selon l'une quelconque des revendications 1 à 5, dans lequel le matériau extérieur flexible (102a,b, 302, 1302a,b, 2602a,b, 3102) comporte un matériau de type vulcanisat thermoplastique VTP.

7. Assemblage scellé (300, 500) selon l'une quelconque des revendications 1 à 6, dans lequel le matériau extérieur flexible (102a,b, 302, 1302a,b, 2602a,b, 3102) a une épaisseur de l'ordre de 2 à 30 mm, telle que de l'ordre de 2 à 20 mm, telle que de l'ordre de 2 à 10 mm, telle que de l'ordre de 2 à 5 mm, telle que de l'ordre de 2,5 à 4 mm, telle que d'environ 3 mm.

8. Assemblage scellé (300, 500) selon l'une quelconque des revendications 1 à 7, dans lequel au moins une partie de la totalité desdits fils métalliques (103, 303a,b, 1303, 2603, 2703a,b,c, 3103) sont disposés à une distance les uns des autres non supérieure à 8 mm, telle que non supérieure à 7 mm, telle que non supérieure à 6 mm, telle que non supérieure à 5 mm, telle que non supérieure à 4 mm.

9. Assemblage scellé (300, 500) selon l'une quelconque des revendications 1 à 8, dans lequel les fils métalliques (103, 303a,b, 1303, 2603, 2703a,b,c, 3103) ont une épaisseur ou un diamètre égal ou non inférieur à 0,8 mm, tel qu'égal ou non inférieur à 0,9 mm, tel qu'égal ou non inférieur à 1 mm, tel qu'égal ou non inférieur à 1,1 mm.

10. Assemblage scellé (300, 500) selon l'une quelconque des revendications 3 à 9, dans lequel le joint flexible renforcé (2701a,b,c) a une partie supérieure et une partie inférieure, et
un matériau en brosse ou en fibre, tel qu'une bande de fibre ou de brosse (2714a,b,c) est fixé à ou intégré dans la partie inférieure du joint flexible renforcé (2701a,b,c) et s'étend en dessous dudit joint flexible renforcé.
